(19) Europäisches Patentamt / European Patent Office / Office européen des brevets

(11) **EP 2 691 740 B1**

(12) **EUROPEAN PATENT SPECIFICATION**

(45) Date of publication and mention of the grant of the patent:
**20.06.2018 Bulletin 2018/25**

(51) Int Cl.:
***G01C 21/34*** *(2006.01)*   ***G01C 21/32*** *(2006.01)*
***G06Q 10/04*** *(2012.01)*

(21) Application number: **12764194.2**

(22) Date of filing: **27.03.2012**

(86) International application number:
**PCT/CA2012/050188**

(87) International publication number:
**WO 2012/129688 (04.10.2012 Gazette 2012/40)**

(54) **METHOD AND SYSTEM FOR GENERATING VIABLE PATTERN-TRANSFERS FOR AN ITINERARY-PLANNING SYSTEM**

VERFAHREN UND SYSTEM ZUR ERZEUGUNG DURCHFÜHRBARER STRUKTURÜBERGÄNGE FÜR EIN ROUTENPLANUNGSSYSTEM

PROCÉDÉ ET SYSTÈME DE GÉNÉRATION DE TRANSFERTS DE PARCOURS VIABLES POUR UN SYSTÈME DE PLANIFICATION D'ITINÉRAIRES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.03.2011   US 201161468393 P**
**28.03.2011   US 201161468400 P**
**26.05.2011   US 201161490100 P**
**26.05.2011   US 201161490105 P**

(43) Date of publication of application:
**05.02.2014   Bulletin 2014/06**

(73) Proprietor: **Trapeze Software Inc.**
**Mississauga, Ontario L4W 5K9 (CA)**

(72) Inventor: **FRANCIS, Matthew David**
**Bradford on Avon, Wiltshire BA15 2DL (GB)**

(74) Representative: **Stuttard, Garry Philip**
**Urquhart-Dykes & Lord LLP**
**Arena Point**
**Merrion Way**
**Leeds LS2 8PA (GB)**

(56) References cited:
**EP-A1- 1 772 706**       **CA-A1- 2 407 487**
**US-A1- 2001 049 581**    **US-A1- 2010 268 450**
**US-A1- 2011 112 759**

- **HANNAH BAST ET AL: "Fast Routing in Very Large Public Transportation Networks Using Transfer Patterns", 6 September 2010 (2010-09-06), ALGORITHMS Â ESA 2010, SPRINGER BERLIN HEIDELBERG, BERLIN, HEIDELBERG, PAGE(S) 290 - 301, XP019152268, ISBN: 978-3-642-15774-5 * abstract ***
- **ZOGRAFOS K G ET AL: "Algorithms for Itinerary Planning in Multimodal Transportation Networks", IEEE TRANSACTIONS ON INTELLIGENT TRANSPORTATION SYSTEMS, IEEE, PISCATAWAY, NJ, USA, vol. 9, no. 1, 1 March 2008 (2008-03-01), pages 175-184, XP011205057, ISSN: 1524-9050**
- **TAN ET AL.: 'Study and implementation of a decision support system for urban mass transit service planning' JOURNAL OF INFORMATION TECHNOLOGY MANAGEMENT vol. XV, no. 1-2, 2004, pages 14 - 32, XP055095155**

EP 2 691 740 B1

## Description

### Field of the Invention

The present invention relates to the field of transportation. In particular, it relates to a method and system for generating viable pattern-transfers for an itinerary-planning system.

### Background of the Invention

Itinerary planning is generally known. Given a travel network, and a set of parameters that form an itinerary-planning request, an itinerary is generated that best satisfies the parameters. The travel network typically is a street network, a walking network or a public transportation network, but, in some cases, can incorporate two or more travel means to enable a comprehensive solution to be provided. The travel network consists of a set of paths, or network segments, that are terminated at both ends by nodes. For example, both metropolitan trains and transit buses travel along fixed routes that have scheduled stops therealong. Nodes can be used to represent the stops and network segments model the travel of the trains and buses between the stops. Nodes are often defined to denote points where interchange between various travel means can occur.

In the case of fixed-route transit, such as via train or urban bus service, the route followed by a vehicle in a direction represents a pattern of travel, or more simply, a pattern. Patterns are punctuated by a series of stops. Itinerary-planning systems store these patterns as a series of network segments spanning between nodes. Geolocations are assigned to the nodes, typically as latitudinal and longitudinal or global positioning system coordinates.

In order for such itinerary-planning systems to generate solutions that include a transfer between a first (or "inbound") pattern to a second (or "outbound") pattern where the geolocations of the stops along the patterns don't align perfectly, transfers between patterns (referred to as "pattern-transfers") by walking are generated by hand and stored with the patterns before deployment so that they can be used to quickly bridge the gap between stops along two different patterns. As changes to the networks occur, such as the addition of new walking paths and the alteration of fixed-route service, the transfers must be manually adjusted and/or added to compensate. This process is tedious, labor-intensive and error-prone. Transfers generated manually may not provide the best solutions for transferring between two patterns. Further, transfers between patterns may be missed entirely.

It is therefore an object of this invention to provide a novel method and system for generating viable pattern-transfers for an itinerary-planning system.

The publication "Fast Routing in Very Large Public Transportation Networks Using Transfer Patterns", Hannah Bast et al, 6 September 2010, Algorithms - ESA 2010, 18th Annual European Symposium. Proceedings, Part I, Springer, pp. 290-301, ISBN: 978-3-642-15774-5 discloses a method for fast routing in very large public transportation networks including the step of pre-computing transfers pattern between pairs of stations.

### Summary of the Invention

According to an aspect of the invention, there is provided a method for generating viable pattern-transfers for an itinerary-planning system, comprising:

identifying pairs of patterns along fixed transit routes that are proximate one another, each of said patterns comprising a number of stops connected by pattern segments traveled in a specific order;
identifying pattern-transfers between said stops along an inbound pattern of said pairs and said stops along an outbound pattern of said pairs;
discarding at least one of said pattern-transfers if traveling from said inbound pattern to said outbound pattern via said at least one of said pattern-transfers is unadvantageous compared to traveling from said inbound pattern to said outbound pattern via at least one other of said pattern-transfers; and
storing said undiscarded pattern-transfers in storage for use by an itinerary-planning system.

The pattern-transfers can traverse a walking network. The identifying pattern-transfers can include: determining if said pattern-transfers between one of said stops along said inbound pattern and stops along said outbound pattern and other patterns have been previously identified.

The identifying pattern-transfers can further include:
performing an itinerary query over a walking network to identify said pattern-transfers between said one stop along said inbound pattern and stops proximate said one stop along said outbound pattern and other patterns if said pattern-transfers have not been identified for said one stop along said inbound pattern.

The itinerary query can include the one stop along the inbound pattern as an origin, an arbitrary location relatively distant from the one stop as a destination and a specified maximum walking distance. The itinerary query can also include an arbitrary departure time.

The identified pattern-transfers can be registered in a node-connection map, which can indicate that the itinerary query was performed for the one stop along the inbound pattern. The determining can include determining if the itinerary query has been performed for the one stop.

The identifying pattern-transfers can include:
performing an itinerary query over a walking network to identify said pattern-transfers available at a stop along segment between one of said stops on said first pattern and one of said stops on said second pattern.

The identifying pattern-transfers can include: identifying pattern-transfers between said stops along said inbound pattern and said stops on said outbound pattern.

The discarding can include: identifying at least one alternate route from said inbound pattern to said outbound pattern via said other pattern-transfers having a shorter expected travel time and walking distance than via said at least one pattern-transfers.

The discarding can include:

selecting outbound pattern segments along said outbound pattern, commencing with a first of said outbound pattern segments and subsequently selecting immediately-subsequent outbound pattern segments; and

selecting inbound pattern segments along said inbound pattern, commencing with a last of said inbound pattern segments and subsequently selecting immediately-preceding inbound pattern segments.

The discarding can further include: evaluating transferring from said inbound pattern to said outbound pattern via said pattern-transfers bridging from the end of said selected inbound pattern segments to the start of said selected outbound pattern segments in comparison to transferring from said inbound pattern to said outbound pattern via said pattern-transfers bridging from the end of previously-selected inbound pattern segments to the start of said previously-selected outbound pattern segments.

The discarding can further include: discarding said pattern-transfers bridging from the end of said selected inbound pattern segments to the start of said selected outbound pattern segments if transferring from said inbound pattern to said outbound pattern via said pattern-transfers bridging from the end of said selected inbound pattern segments to the start of said selected outbound pattern segments is unadvantageous in comparison to transferring from said inbound pattern to said outbound pattern via said pattern-transfers bridging from the end of said previously-selected inbound pattern segments to the start of said previously-selected outbound pattern segments.

The discarding can further include: discarding said pattern-transfers between said selected inbound pattern segments to the start of said selected outbound pattern segments if transferring from said inbound pattern to said outbound pattern via said pattern-transfers bridging from the end of said selected inbound pattern segments to the start of said selected outbound pattern segments is unadvantageous in comparison to transferring from said inbound pattern to said outbound pattern via said pattern-transfers bridging from the end of said previously-selected inbound pattern segments and said previously-selected outbound pattern segments.

The discarding can further include: discarding said pattern-transfers bridging from the end of said selected inbound pattern segments to the start of said selected outbound pattern segments if said pattern-transfers bridging from the end of said selected inbound pattern segments to the start of said selected outbound pattern segments are longer than said pattern-transfers bridging from the start of said selected inbound pattern segments to the start of said previously-selected outbound pattern segments.

The discarding can further include: discarding said pattern-transfers bridging from the end of said selected inbound pattern segments to the start of said selected outbound pattern segments if said pattern-transfers bridging from the end of said selected inbound pattern segments to the start of said selected outbound pattern segments are longer than said pattern-transfers bridging from the end of said selected inbound pattern segments to the end of said selected outbound pattern segments.

The discarding can further include: discarding said pattern-transfers bridging from the end of said selected inbound pattern segments to the start of said selected outbound pattern segments if said pattern-transfers bridging from the end of said selected inbound pattern segments to the start of said selected outbound pattern segment are longer than said pattern-transfers bridging from the start of said selected inbound pattern segments to the end of said selected outbound pattern segments.

The discarding can further include: discarding said pattern-transfers bridging from the end of said selected inbound pattern segments to the start of said selected outbound pattern segments if transferring from said inbound pattern to said outbound pattern via said pattern-transfers bridging from the end of said selected inbound pattern segments to the start of said selected outbound pattern segments is slower than transferring from said inbound pattern to said outbound pattern via said pattern-transfers bridging from the start of said selected inbound pattern segments to the end of said selected outbound pattern segments.

The discarding can further include: discarding said pattern-transfers bridging from the end of said selected inbound pattern segments to the start of said selected outbound pattern segments if traveling along said selected inbound segments and transferring from said inbound pattern to said outbound pattern via said pattern-transfers bridging from the end of said selected inbound pattern segments to the start of said selected outbound pattern segments is unadvantageous in comparison to transferring from said inbound pattern to said outbound pattern at the start of said selected inbound pattern segments and traveling along said outbound pattern to the start of said selected outbound pattern segments.

The discarding can further include: discarding said pattern-transfers bridging from the end of said selected inbound pattern segments to the start of said selected inbound pattern segments if transferring from said inbound pattern to said outbound pattern via said pattern-transfers bridging from the end of said selected inbound pattern segments to the start of said selected outbound pattern segments and traveling along said selected outbound pattern segments is unadvantageous in comparison to traveling further along said inbound pattern past the end of said selected inbound pattern segments and then transferring from said inbound pattern to said outbound pattern via said pattern-transfers bridging to the end of said selected outbound pattern segments.

The identifying pairs of patterns can include: determining that said pairs of patterns are proximate one another if rectangles bounding said patterns in said pair overlap or are proximate one another.

According to another aspect of the invention, there is provided a computer system for generating viable pattern-transfers for an itinerary-planning system, comprising:

a processor executing computer-readable instructions for identifying pairs of patterns along fixed transit routes in a travel network database that are proximate one another, each of said patterns comprising a number of stops connected by pattern segments traveled in a specific order, identifying pattern-transfers between said stops along an inbound pattern of said pairs and said stops along an outbound pattern of said pairs, discarding at least one of said pattern-transfers if traveling from said inbound pattern to said outbound pattern via said at least one of said pattern-transfers is unadvantageous compared to traveling from said inbound pattern to said outbound pattern via at least one other of said pattern-transfers, and storing said undiscarded pattern-transfers in storage accessible to said computer system for use by an itinerary-planning system.

Other and further advantages and features of the invention will be apparent to those skilled in the art from the following detailed description thereof, taken in conjunction with the accompanying drawings.

**Brief Description of the Drawings**

The invention will now be described in more detail, by way of example only, with reference to the accompanying drawings, in which like numbers refer to like elements, wherein:

Figure 1 is a schematic diagram of a computer system for generating viable pattern-transfers for an itinerary-planning system in accordance with an embodiment of the invention, and its operating environment;

Figure 2 is a block diagram of the computer system shown in Figure 1;

Figure 3 shows an exemplary set of trips for a bus route that are considered during itinerary planning by the computer system of Figure 1;

Figure 4 illustrates the patterns traveled by the trips of Figure 3;

Figure 5 is a flowchart of the general method of generating pattern-transfers used by the computer system of Figure 1;

Figure 6 shows an exemplary pattern analyzed during the method of Figure 5;

Figure 7 shows a bounding rectangle drawn around the pattern of Figure 5;

Figure 8 shows a second exemplary pattern intersecting the first exemplary pattern of Figure 7 and a bounding rectangle drawn about it;

Figure 9 shows the determination of proximity in the method of Figure 5 for the first pattern of Figure 6 and another exemplary pattern where the bounding rectangles for the patterns do not overlap;

Figure 10 shows the patterns of Figure 8 and their respective stops;

Figure 11 is a flowchart of the general method of determining viable pattern-transfers, if any, from an inbound pattern to an outbound pattern in the method of Figure 5;

Figure 12 is a flowchart of the general method of determining pattern-transfers between stops of the inbound and outbound patterns in the method of Figure 11;

Figure 13 illustrates the identification of pattern stops within a maximum walking distance of the last stop on the inbound pattern;

Figures 14A and 14B show the general method of determining if a pattern-transfer from the inbound pattern to the outbound pattern is viable in the method of Figure 11;

Figure 15 shows the comparison of the expected travel time for a pattern-transfer versus that for any alternative route achieved by traveling further down the inbound pattern;

Figure 16 shows the comparison of the walking distance for a pattern-transfer bridging from the end of a selected inbound pattern segment to the start of a selected outbound pattern segment versus the walking distance along a pattern-transfer bridging from the start of the selected inbound pattern segment to the same stop;

Figure 17 shows the comparison of the walking distance for a pattern-transfer bridging from the end of a selected inbound pattern segment to the start of a selected outbound pattern segment versus the walking distance along a pattern-transfer bridging from the same stop on the inbound pattern to the immediately-subsequent stop along the outbound pattern;

Figure 18 shows the comparison of the walking distance for a pattern-transfer from the end of a selected inbound pattern segment to the start of a selected outbound pattern-transfer versus the walking distance along the pattern-transfer bridging from the start of the selected inbound pattern segment to the end of the selected outbound pattern segment;

Figure 19 shows the comparison of the expected travel time and walking distance of traveling further along the inbound pattern and walking to a stop on the outbound pattern versus walking directly to a stop on the outbound pattern and then continuing therealong until the same stop; and

Figure 20 shows the comparison of the expected travel time and walking distance of walking directly to a stop on the outbound pattern and then continuing therealong to a subsequent stop versus traveling further along the inbound pattern and then walking to the subsequent stop on the outbound pattern.

## Detailed Description of the Embodiments

An itinerary-planning system generates itineraries in response to receiving itinerary-planning requests. Itinerary-planning requests generally include an origin (commonly referred to as a "point of departure") and a destination, and also can include a desired time of departure or arrival and various other constraints. One or more suitable travel itineraries may be generated by the itinerary-planning system, if possible. Depending on the type of itinerary-planning system, an itinerary can include public transportation, or walking and road travel by private vehicle or taxi, or some combination thereof.

Itinerary-planning systems generally store, or access stored, information about various travel networks to enable them to plan itineraries. Such systems can include information regarding fixed-route transit, street and walking networks. The information stored for fixed-route transit typically consists of patterns and schedule information, but may also include additional information regarding expected travel speeds along the pattern. Patterns represent the travel of a fixed-route transit vehicle in one direction between the various stops along the route. The stops are types of network nodes that are physical locations, such as intersections, bus stops and train stations. Pattern segments are a type of network segment that represents means for traveling between the nodes. A network segment is usually one of the following: a set of trips between consecutive stopping points, a walk transfer between vehicles, and the traversal of a street segment, either on foot or by private vehicle (for example, car or taxi). The geolocations (i.e., latitude and longitude coordinates) of the stops are stored together with the pattern segments that span the stops.

Walking networks are somewhat different, in that there are no patterns, *per se,* or schedules. Loosely described, walking networks consist of network segments that represent a route that can be traversed by a pedestrian between network nodes that define points at which alternative route choices can be made. As different choices may be available and issues may be encountered for each direction of travel along a portion of a walking network, network segments represent travel in one direction. Thus, a walking path may be represented by two network segments, one traveling in each direction. Additional information for walking networks may include expected travel speeds, gradients, etc. The geolocations of the network nodes are stored together with the other information for the walking segments.

Itinerary-planning systems generate itineraries by chaining together network segments stored in a database and favoring builds of chained network segments that appear more likely to provide a better solution over other builds. When such systems are looking to extend a build of network segments chained together, they look to see what network segments are available at the end node of the last network segment in the chain terminates. This generally continues until one or more solutions to the destination are found.

The exploration of walking networks available at stops along a pattern being explored at runtime in a subconscious effort to locate other patterns that may take one closer to the destination can be very resource-intensive. As a result, it is desirable to generate network segments representing the traversal from one pattern to another on foot once so that they can be used reiteratively during the day-to-day operation of the itinerary-planning system. By pre-generating such "pattern-transfers", itinerary solutions to queries can be generated much more rapidly.

The invention relates to a method and system for generating viable pattern-transfers for an itinerary-planning system. Given a set of fixed-route transit patterns, proximate pairs of patterns of fixed-route transit are identified. The patterns include a number of stops connected by pattern segments traveled in a specific order. Pattern-transfers between the stops along an inbound pattern of one of the pairs and the stops along an outbound pattern of one of the pairs are identified. At least one of the pattern-transfers is discarded if traveling from the inbound pattern to the outbound pattern via the at least one of the pattern-transfers is unadvantageous compared to traveling from the inbound pattern to the outbound pattern via at least one other of the pattern-transfers. The undiscarded walking segments are stored in storage for use by an itinerary-planning system.

It has been found that, by generating viable pattern-transfers prior to deployment using an automated approach, the pattern-transfers stored for use by an itinerary-planning system are selected after consideration of the various possible walking segments one can use to get from one pattern to another. Using this methodical approach, some less-obvious walking segments may be located that are more favorable than those identified using a manual process. Further, the manual labor involved in maintaining the pattern-transfers is greatly reduced. In addition, the pattern-transfers can be revised immediately in response to continual changes to the travel network.

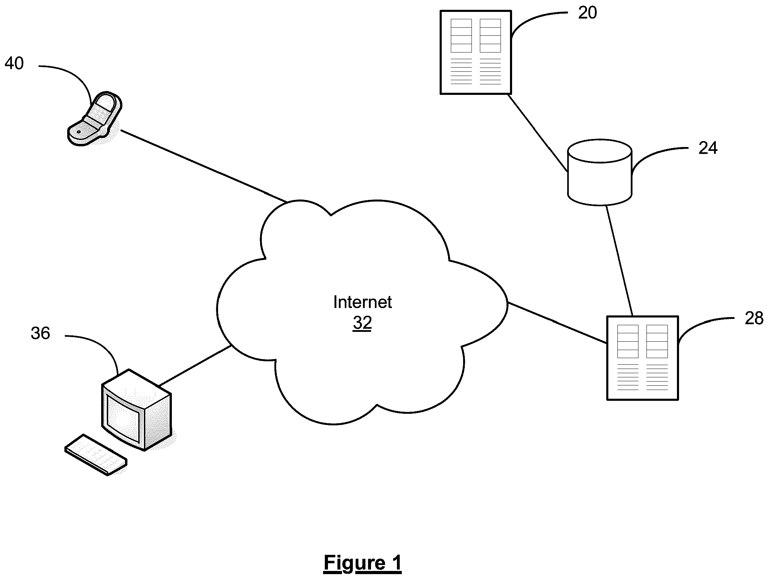

Figure 1 shows a computer system 20 for generating viable pattern-transfers in accordance with an embodiment of the invention, and its operating environment. The computer system is in communication with a travel network database 24. The travel network database 24 stores the travel network data and is maintained independent of the computer system 20. That is, it may exist on a separate machine, such as a dedicated SQL server. The travel network data can include public transportation route and schedule information, walking networks, traffic volume information, etc. Public transportation routes can include, for example, trunk routes such as intercity trains, buses, ferries and airplanes, and local routes such as urban bus and train routes. The walking networks include pedestrian routes and gradients for the routes.

An itinerary-planning system 28 is also in communication with the travel network database 24. The itinerary-planning system 28 is coupled to a large communications network 32, such as the Internet. The itinerary-planning system 28 operates a web service for serving web pages in response to requests for the same. A personal computer 36 is also shown in communication with the communications network 32 and executes an operating system and a web browser for enabling a user to access content available through web servers. A mobile device 40 is additionally in communication with the communications network 32 via a number of intermediate cellular communications towers, servers and switches that are not shown. Like the personal computer 36, the mobile device 40 executes an operating system and a web browser for enabling a user to access functionality and data available through web servers.

Using the travel network data stored in the travel network database 24, the itinerary-planning system 28 can receive an itinerary-planning request generated via a served request page, analyze the travel network data, generate one or more itineraries, and generate and serve one or more web pages that show the itineraries generated for the itinerary-planning request.

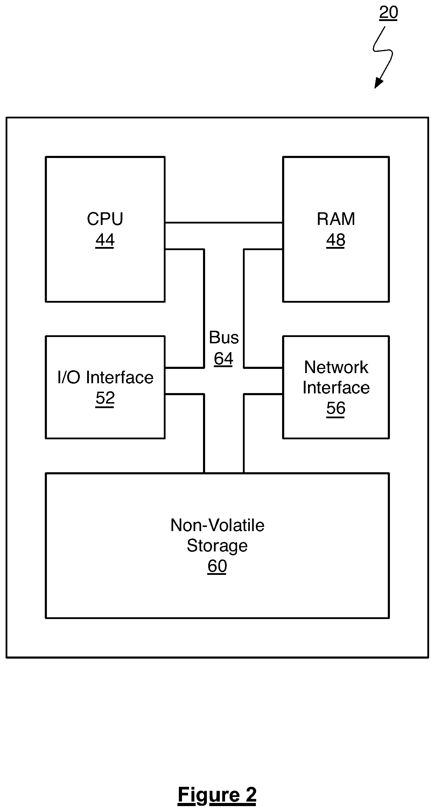

Figure 2 shows a number of components of the computer system 20 for generating viable pattern-transfers of Figure 1. As shown, the computer system 20 has a number of components, including a central processing unit ("CPU") 44 (also referred to simply as a "processor"), random access memory ("RAM") 48, an input/output interface 52, a network interface 56, non-volatile storage 60, and a local bus 64 enabling the CPU 44 to communicate with the other components. The CPU 44 executes computer-executable instructions for an operating system and transfer-generating software that provide the desired functionality. RAM 48 provides relatively-responsive volatile storage to the CPU 44. The input/output interface 52 allows for input to be received from one or more devices, such as a keyboard, a mouse, etc., and enables the CPU 44 to present output to a user via a monitor, a speaker, etc. The network interface 56 permits communication with other systems for retrieving and storing travel network data and for performing walking network itinerary queries. Non-volatile storage 60 stores the computer-executable instructions for providing the operating system and the transfer-generating software. During operation of the computer system 20, the computer-executable instructions, and the data may be retrieved from the non-volatile storage 60 and placed in RAM 48 to facilitate execution.

The transfer-generating software generates viable pattern-transfers between patterns, where possible.

Travel Network Data

In order to understand the type of data that is stored in the travel network database 24, as well as its use, it will now be described.

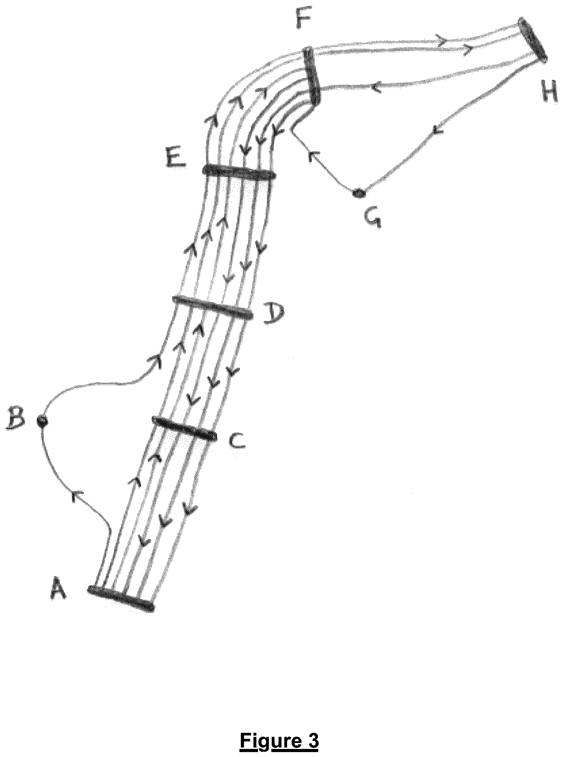

Figure 3 shows an exemplary set of trips in both directions for a bus route between two nearby towns, A and F. The sequence of stops visited is the same for all trips in the day, except in the morning and evening when the bus either detours or terminates short of its normal destination. All trips for the bus are described as belonging to the same route. All bus trips from A to F are described as outbound trips. Likewise, bus trips from F to A are described as inbound trips.

All bus trips that visit exactly the same sequence of stops are said to belong to the same pattern. In this example, there are three patterns in each direction (normal - trips 2 to 10, detour - trip 1, and short running - trips 11 and 12). Vehicles that run to the same pattern do not overtake one another. A pattern also has a unique sequence of stop activities, i.e. whether passengers may alight, board, or transfer to other vehicles. The travel network database 24 groups all public transportation trips into patterns. The link between each consecutive pair of stops in a pattern is called a pattern segment. The same is also true for trains and other public transit vehicles performing fixed routes. Each stop is assigned a unique node ID that is associated with the stop's geolocations.

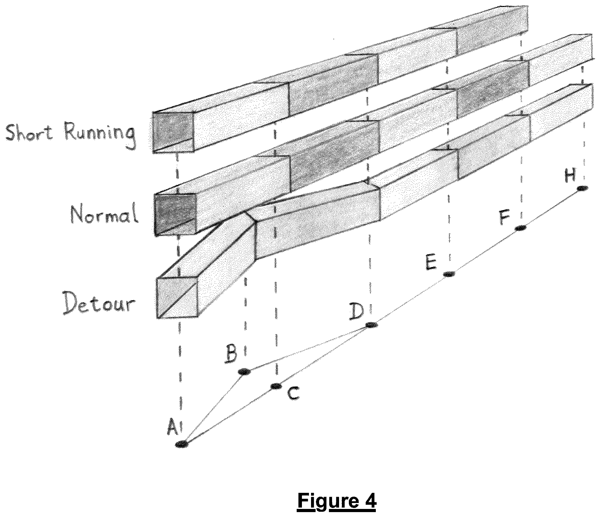

Figure 4 illustrates a useful visualization of the different patterns of bus trips along the route of Figure 3. The patterns are stacked up above the map, i.e. above the page. The trips are grouped into patterns, segmented at each stopping point. Each pattern is a kind of conduit or passage along which trips travel.

For walking networks, each section of walking path between junctions is known as a walking segment. This is a derivation and specific case of a network segment. There is a separate walking segment for each direction of travel. Each segment may have its own maximum walk speed (which may depend on gradient and may vary with time of day). These speeds may be modified using a customer-specific or enquiry-specific multiplication factor.

General method

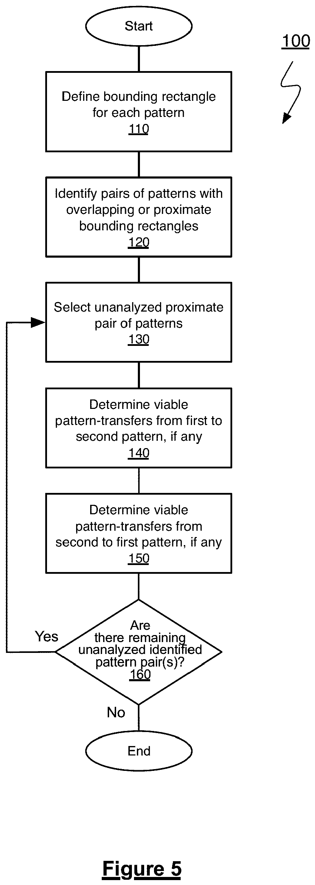

Figure 5 shows the method of generating a viable pattern-transfers for an itinerary-planning system 28 employed by the computer system 20 using the travel network data stored in the travel network database 24 generally at 100. The method 100 commences with the definition of bounding rectangles for each pattern (110). Fixed routes (i.e., patterns) can be quite arbitrary in their path. As a result determining if it may be generally feasible to transfer from one pattern on foot to another pattern can be a cumbersome task. In one approach, the general distance between each stop of an inbound pattern and each stop of an outbound pattern can be calculated to determine if there are any potentially viable walking transfers between the pair of patterns. This process can be very time consuming. In order to simplify the process of identifying pairs of patterns that may be proximate to one another, the computer system 20 retrieves data for each pattern from the travel network database 24 and determines a bounding rectangle representing the area of each pattern. If the bounding rectangles of two patterns are close, there may be a viable walking transfer between the patterns.

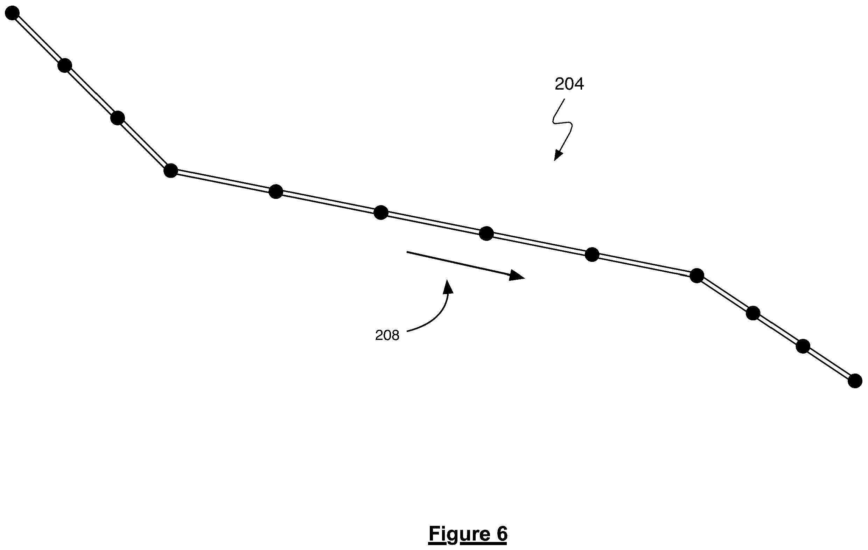

Figure 6 shows an exemplary pattern 204 consisting of a set of stops and pattern segments adjoining them. A direction of travel 208 is indicated, specifying that the pattern represents passage from the top-left-most stop to the bottom-right-most stop.

Assume that the stops of the pattern are $S_1$ to $S_n$. For each stop, Si, the geolocation coordinates $(x_i, y_i)$ are determined. The bounding rectangle for a pattern is thus the rectangle whose two cater-cornered vertices are [$min(x_i)$ for all i, $min(y_i)$ for all i] and [$max(x_i)$ for all i, $max(y_i)$ for all i]. For purposes of simplifying the notation, the coordinates of the cater-cornered vertices of a bounding rectangle for a pattern $P_j$ will be written as [$min(x_j), min(y_j)$] and [$max(x_j), max(y_j)$], where $x_j$ and $y_j$ represent all of the values of x and y for the stops on the pattern $P_j$.

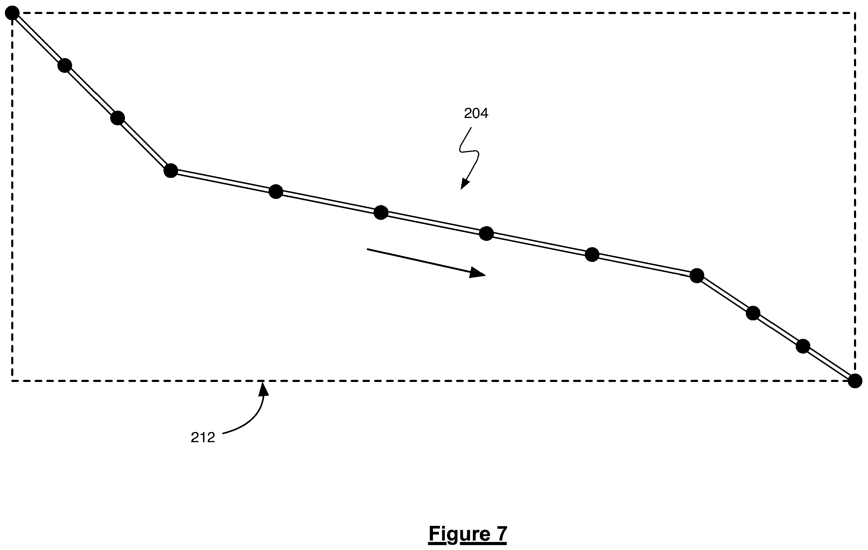

Figure 7 shows the pattern 204 of Figure 6 with a bounding rectangle 212 drawn around it. The computer system 20 registers the two cater-cornered vertices of each bounding rectangle together with an identifier of the corresponding pattern.

Returning to Figure 5, once the bounding rectangle has been defined for each pattern, pairs of patterns with overlapping or proximate bounding rectangles are identified (120). The computer system 20 compares the bounding rectangle for each pattern with that of other patterns in the same general area. The bounding rectangles are geographically sorted so that it is not necessary to consider each and every pattern. A pattern is deemed to be proximate to another pattern if (a) their bounding rectangles overlap, or (b) are within a threshold distance from each other, as defined by the displacement along the x (east-west) axis and the y (north-south) axis. For patterns $P_j$ and $P_k$, their bounding rectangles are found to overlap if all of the following four conditions are satisfied:

$$min(x_j) < max(x_k)$$

$$min(x_k) < max(x_j)$$

$$min(y_j) < max(y_k)$$

$$min(y_k) < max(y_j)$$

If any of these conditions is not satisfied, then the bounding rectangles do not overlap.

Patterns whose bounding rectangles do not overlap may still be deemed to be proximate one another if the bounding rectangles are close to one another. In particular, if the displacement between the bounding rectangles is not greater than a threshold, T, along both the x and the y axis, then the patterns are deemed to be proximate one another. Thus, expressed formulaically, patterns $P_j$ and $P_k$ are deemed to be proximate one another if all of the following four conditions are satisfied:

$$min(x_j) < max(x_k) + T$$

$$min(x_k) < max(x_j) + T$$

$$min(y_j) < max(y_k) + T$$

$$min(y_k) < max(y_j) + T$$

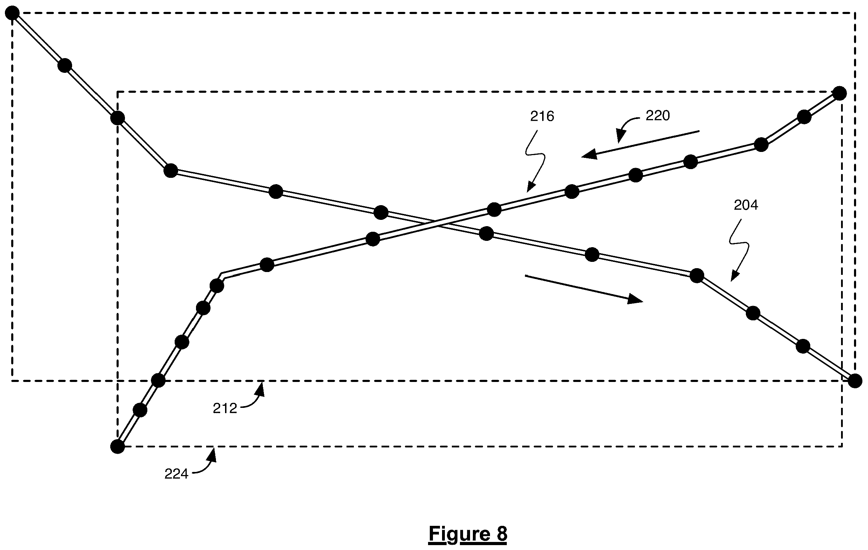

Figure 8 illustrates the pattern 204 of Figure 6 and its bounding rectangle 212, as well as another pattern 216 having a direction of travel 220 and a bounding rectangle 224. As can be seen, the two patterns 204 and 216 are proximate one another; in fact, they intersect each other. As a result, the bounding rectangles 212 and 224 overlap, and the computer system 20 would identify these two patterns as being proximate one another at 120.

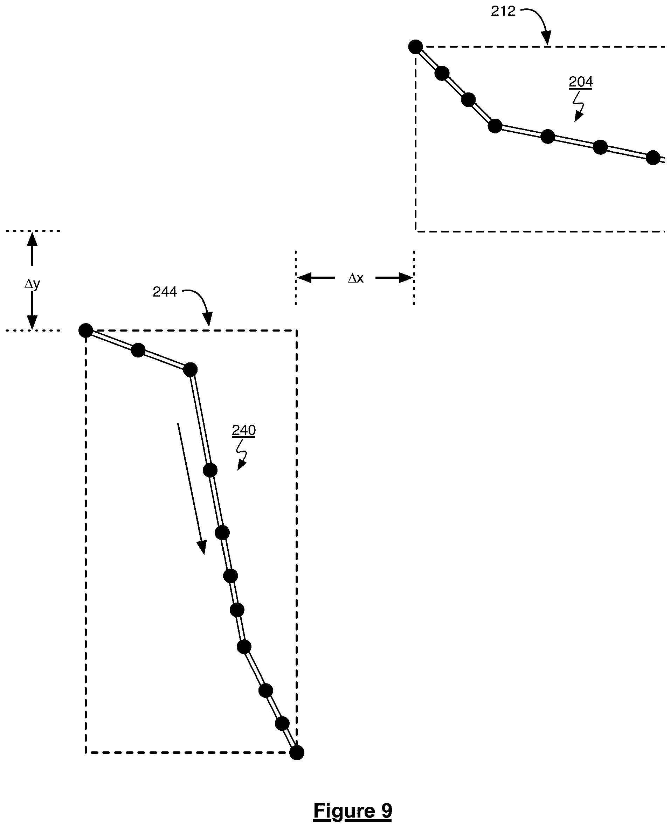

Figure 9 illustrates a portion of the pattern 204 of Figure 6 and its bounding rectangle 212, together with another pattern 240 and its bounding rectangle 244. As shown, the bounding rectangles 212 and 244 do not overlap. In such cases, for any axis along which the rectangles do not overlap, the displacement along both the x and y axes (shown as $\Delta x$ and $\Delta y$) must be below the threshold, T, if the two patterns 204 and 240 are deemed to be proximate. Of note is that this determination of proximity of the bounding rectangles does not ensure that there will be viable walking transfers between the two patterns, but is used to select pairs of patterns that will be further analyzed to determine if there are viable walking transfers therebetween.

Each pair of patterns deemed to be proximate one another is stored in a proximate pattern list by the computer system 20.

Once pairs of proximate patterns have been identified at 120, an unanalyzed proximate pair of patterns is selected from the proximate pattern list (130). Next, it is determined if there are any viable pattern-transfers from the inbound pattern to the outbound pattern in the pair selected from the proximate pattern list (140). As it will be desirable to identify viable pattern-transfers from the each pattern to the other in a pair of proximate patterns, one of the pair of patterns is first selected as an inbound pattern and the other as an outbound pattern and viable pattern-transfers from the inbound pattern to the outbound pattern are looked for. Then, the pattern previously selected as an outbound pattern is made the inbound pattern and the pattern previously selected as an inbound pattern is made the outbound pattern, and the process of identifying viable pattern-transfers from the inbound pattern to the outbound pattern is repeated. In order to illustrate the identification of viable pattern-transfers between a pair of patterns that are proximate one another, an exemplary pair of patterns proximate one another will be shown.

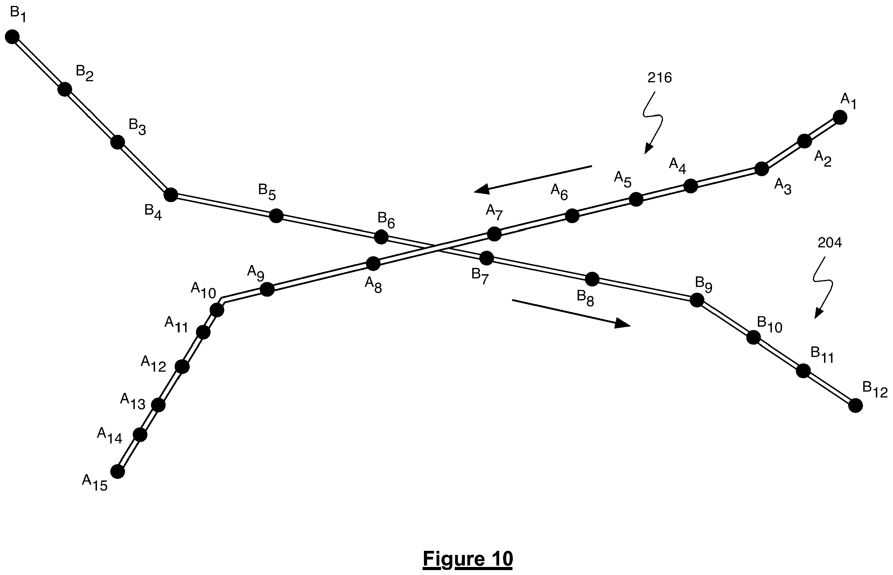

Figure 10 shows the exemplary patterns 204 and 216 of Figure 8. As shown, pattern 204 and pattern 216 intersect each other. For purposes of this discussion, pattern 216 is selected as the inbound pattern and pattern 204 is selected as the outbound pattern to start. A set of stops A1 to A15 of the inbound pattern 216 are shown. Another set of stops B1 to B12 of the outbound pattern 204 are also shown. As will be appreciated, some patterns will have many more stops than illustrated, whereas other patterns may have fewer stops.

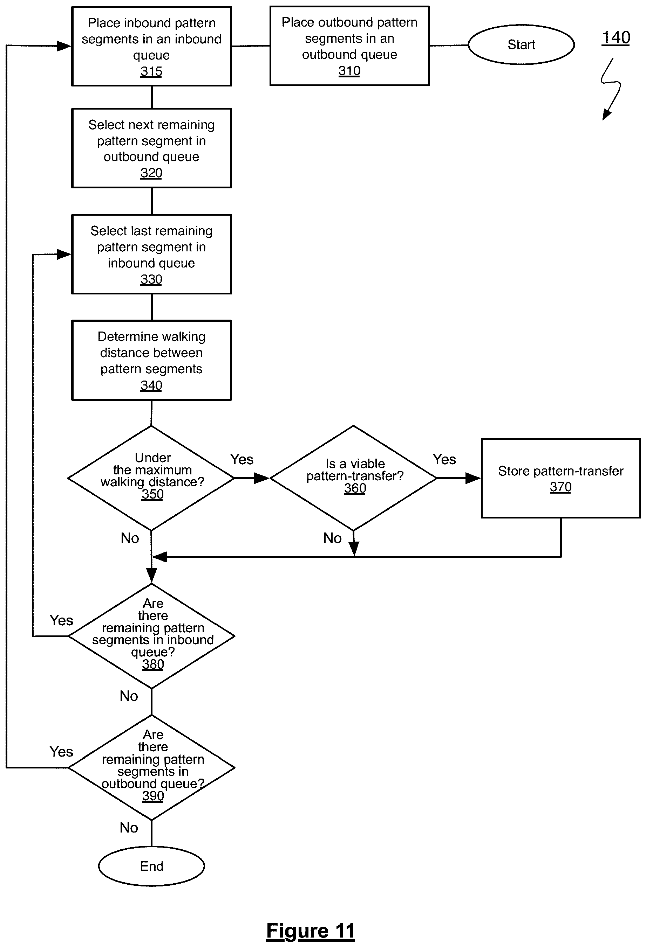

Figure 11 better illustrates the process of identifying viable pattern-transfers from the inbound pattern to the outbound pattern. It has been found that, by exploring earlier segments of the outbound pattern before later ones, and by exploring later segments of the inbound pattern before earlier ones, the knowledge gained can expedite the process of evaluating later segments on the outbound pattern and earlier segments of the inbound pattern.

The process commences with the placement of all of the outbound pattern segments in an outbound queue (310). The pattern segments or ordered in the queue such that the first pattern segment travel along the pattern is placed on top, with the remaining pattern segments being placed in the outbound queue in the order traveled. Next, all of the inbound pattern segments are placed in an inbound queue (315). The pattern segments are ordered in the queue such that the last pattern segment traveled along the pattern is placed on top with the remaining pattern segments being placed in the inbound queue in the reverse order traveled. A next remaining network segment along the outbound pattern is then selected (320). As the outbound pattern segments in the outbound queue are placed in the same order as they are traveled along the pattern, an outbound pattern segment selected from the outbound queue is the "earliest" of the remaining outbound pattern segments in the outbound queue. For example, when pattern 204 shown in Figure 10 is selected as the outbound pattern, the pattern segments are placed in the outbound queue and selected in the following order: $B_1$-$B_2$, then $B_2$-$B_3$, and so on. Next, a last remaining network segment along the inbound pattern is selected (330). As the inbound pattern segments in the inbound queue are placed in the reverse order as they are traveled along the pattern, an inbound pattern segment selected from the inbound queue is the "last" of the remaining inbound pattern segments in the inbound queue. For example, when pattern 216 shown in Figure 10 is selected as the inbound pattern, the network segments are selected in the following order: $A_{14}$-$A_{15}$, then $A_{13}$-$A_{14}$, and so on.

Once an inbound and an outbound segment are selected, the walking distance between the selected pattern segments is determined (340). Walking distances are determined from the end node of the selected inbound pattern segment to the start node of the selected outbound pattern. The "start node", or "start", of a pattern segment is the network node that is visited earlier during travel along the pattern, and the "end node", or "end", of a pattern segment is the network node that is visited later during travel along the pattern. The actual walking distances are determined by performing an itinerary query using the end node of the selected inbound pattern segment and specifying a threshold for the maximum walking distance permitted. The specified maximum walking distance is a selected distance that is deemed too far for anyone to walk between patterns when trying to generate an itinerary. Builds of network segments on the walking network commencing at the end node of the selected inbound pattern segment, referred to as the "origin", are expanded, thus exploring the walking network. If a stop along any pattern (not just the two being examined) is discovered during expansion, the walking distance from the end node of the selected inbound pattern segment to the discovered stop is registered in a node-connection map. The node-connection map is a registry of stops along the patterns that are within the maximum walking distance from other stops on the other patterns. Entries in the node-connection map generally include the origin node ID and the node ID of the located stops, as well as information about the walks. Builds of network segments explored from the end node of the selected inbound pattern segment are not allowed to exceed the maximum walking distance. Once all builds not exceeding the maximum walking distance have been explored, an entry is made in the node-connection map of (origin node ID, origin node ID) to indicate that no other stops are within the maximum walking distance and that an itinerary query was performed for the origin node; that is, the end node of the selected inbound pattern segment. The node-connection map is maintained in storage, thereby enabling rapid referral to previously-determined walking distances from stops to other stops. This is useful as a stop location, as represented by a node ID, can be common to more than one pattern, and stop-to-stop walking itineraries previously identified can be used at later times.

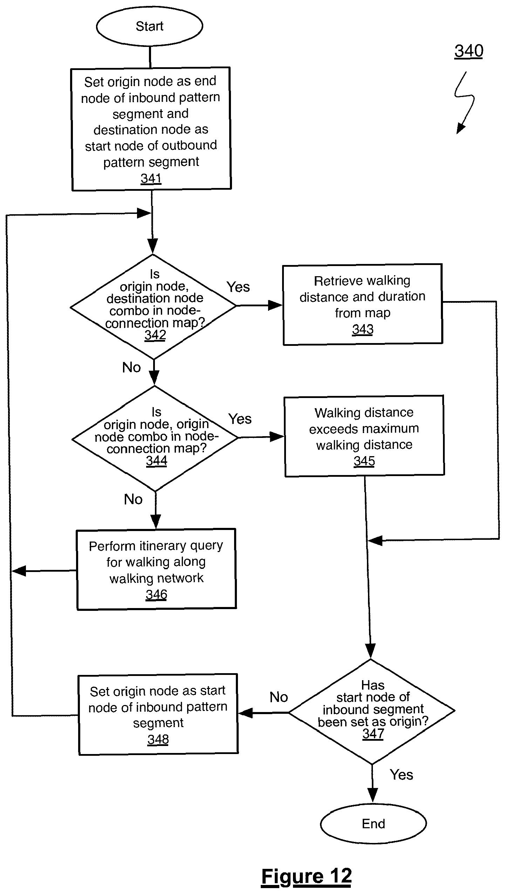

Figure 12 shows the determination of the walking distance between the selected inbound pattern segments and the selected outbound pattern segments in greater detail. The walking distance from both the start and end nodes of the selected inbound pattern segment to the selected outbound pattern segment is determined in the same manner. First, the origin node is set as the end node of the selected inbound pattern segment and the destination node is set as the start node of the selected outbound pattern segment (341). Thus, the distance of the walking transfer from the end node of the selected inbound pattern segment to the start of the selected outbound pattern segment is determined first. Next, the computer system 20 determines if the (origin node ID, destination node ID) combination is in the node-connection map (342). If the walking distances from the origin node to all near stops within the maximum walking distance were previously calculated, they are stored in the node-connection map for later use so that that the same itinerary queries need not be performed. If the (origin node ID, destination node ID) combination is in the node-connection map, the previously-calculated walking distance and duration is retrieved from the node-connection map (343). If the (origin node ID, destination node ID) combination is not in the node-connection map, it is determined whether the (origin node ID, origin node ID) combination is in the node-connection map (344). If the walking distance from the origin node to all near stops within the maximum walking distance was previously determined, an entry is made in the node-connection map for each stop within the maximum walking distance of the origin, together with on entry of (origin node ID, origin node ID). If an entry of (origin node ID, destination node ID) is not found in the node-connection map, but an entry of (origin node ID, origin node ID) is found, it indicates that the walking network around the origin node has previously been explored and that the destination node was not found within the maximum walking distance. Thus, if the entry (origin node ID, origin node ID) is found in the node-connection map at 344, then the walking distance between the origin node and the destination node is assumed to exceed the maximum walking distance (345).

If neither (origin node ID, destination node ID) nor (origin node ID, origin node ID) are in the node-connection map, then an itinerary query for walking along the walking network around the origin node is performed (346). The itinerary query specifies an arbitrary destination relatively distant from the origin node such that all directions are explored around the origin. Further, an arbitrary time of departure and the maximum walking distance threshold are specified. By expanding builds of network segments commencing at the origin node, but stopping the expansion once all builds cannot be expanded without exceeding the maximum walking distance, all stops for any pattern within walking distance from the origin node can be registered in the node-connection map. As the stops of any pattern are encountered in the expansion builds, entries of (origin node ID, destination node ID) are placed in the node-connection map, together with the distance and duration. In order to calculate a duration for a walk between two stops, the walk's distance is divided by an average walking speed specified during configuration of the computer system 20. Further, by making an entry in the node-connection map of (origin node ID, origin node ID), it can be quickly determined from the node-connection map whether the analysis has been performed for the origin node.

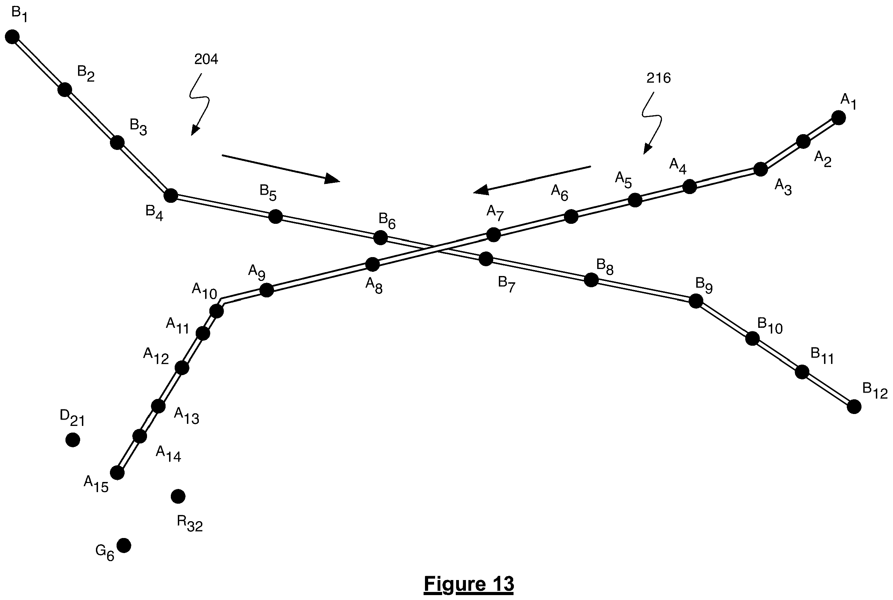

Figure 13 shows an exemplary set of stops that may be encountered during the itinerary query performed at 345 for the stop $A_{15}$. In particular, the following six entries are placed into the node-connection map:

| Origin Node | Destination Node | Distance (m) | Duration (s) |
|---|---|---|---|
| $A_{15}$ | $A_{14}$ | 426 | 256 |
| $A_{15}$ | $A_{13}$ | 719 | 472 |
| $A_{15}$ | $D_{21}$ | 459 | 281 |
| $A_{15}$ | $G_6$ | 594 | 374 |
| $A_{15}$ | $R_{32}$ | 576 | 382 |
| $A_{15}$ | $A_{15}$ | 0 | 0 |

In this illustrated example, stops along the same pattern and on other patterns are discovered during the itinerary generating at 345. In particular, nodes $A_{13}$ and $A_{14}$ are stops along the same pattern, and $D_{21}$, $G_6$ and $R_{32}$ are stops along other patterns, all of which are within the maximum walking distance of $A_{15}$. Stops $A_{12}$ to $A_1$, and all of the stops on pattern 204 for that matter, in this case were not discovered while exploring builds less than the maximum walking distance and, as a result, corresponding entries are not made in the node-connection map with $A_{15}$ as the origin node. As will be appreciated, when performing the same analysis for $A_8$ and $A_7$, at least, walking segments from these stops to stops along pattern 204 are likely to be located and placed in the node-connection map.

Returning again to Figure 12, once the itinerary query is performed at 346, the process returns to 342 to determine if the distance and duration of the walking segment from the origin node to the destination node has been registered or, alternatively, if the distance is deemed to be too far as the walking distance exceeds the maximum walking distance specified.

Upon retrieving the walking distance and duration from the node-connection map at 343 or upon concluding that the walking distance from the origin to the destination exceeds the maximum walking distance at 345, it is determined if the start node for the selected inbound pattern segment has been set as the origin node (347). If it has not, the origin node is set to be the start node of the inbound pattern segment (348), after which it is determined if the (origin node ID, destination node ID) combination is in the node-combination map at 342. If, instead, it is determined that the start node for the selected inbound pattern segment had previously been set as the origin node, the process 340 of determining the walking distance between the selected inbound and outbound pattern segments ends.

Returning again to Figure 11, once the walking distance and duration has been determined between the start and end nodes of the selected inbound pattern segment and the selected outbound pattern segment, the process of evaluating the pattern-transfer from the end of the selected inbound pattern segment to the start of the selected outbound pattern segment begins. First, it is determined if the walking distance from the end node of the selected inbound pattern segment to the start node of the selected outbound pattern segment exceeds the maximum walking distance (350). Here, if it was determined that the walking distance from the end node of the selected inbound pattern segment to the selected outbound pattern segment did not exceed the maximum walking distance, as a distance and duration were returned at 343, it is determined if the pattern-transfer from the end node of the selected inbound pattern segment to the selected outbound pattern segment identified at 340 is a viable pattern-transfer (360). That is, it is determined if the pattern-transfer from the end node of the selected inbound pattern segment to the selected outbound pattern segment identified at 340 may possibly be used to generate a possible itinerary solution by the itinerary-planning system 28. For example, where transferring between patterns through one pattern-transfer involves a longer walk and more travel time than transferring between the two patterns in some other manner, the pattern-transfer may be discarded as it will not yield a better itinerary in any foreseeable circumstances. By keeping such pattern-transfers, the itinerary-planning system 28 has to explore more builds to arrive at a solution, thereby unnecessarily slowing down the itinerary-planning process at runtime.

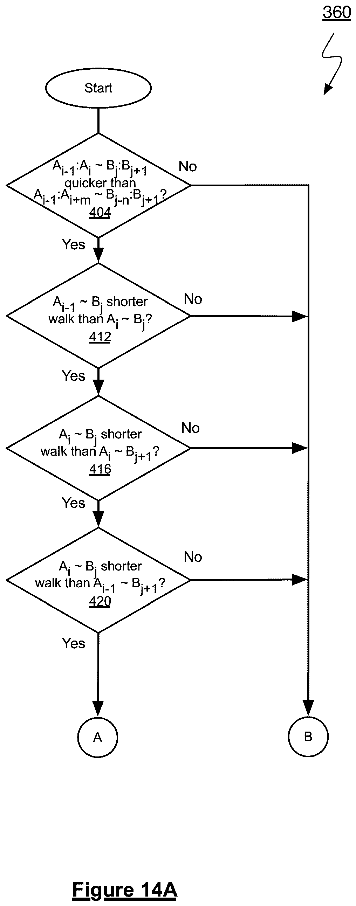

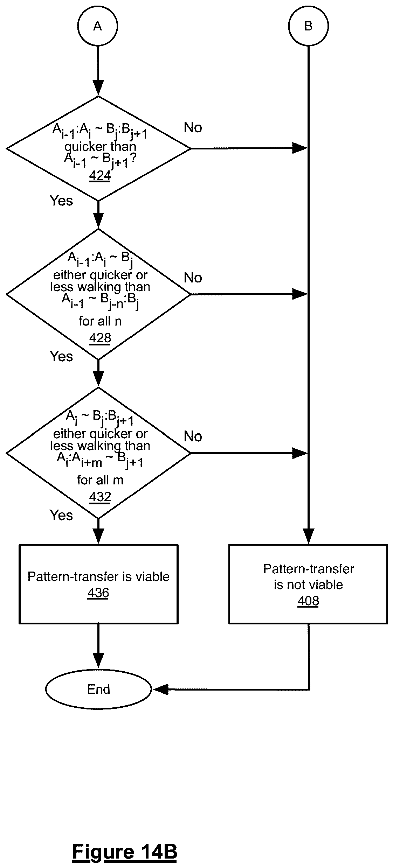

Figures 14A and 14B show the process of determining whether a pattern-transfer is viable. The process commences with the determination of whether the currently-examined pattern-transfer is quicker than traveling further along the inbound pattern, transferring to the outbound pattern at some earlier stop thereon using previously-identified viable walking transfers (if any), then traveling along the outbound pattern to the same stop as at the end of the walking transfer (404). That is, whether

$$A_{i-1}{:}A_i \sim B_j{:}B_{j+1}$$

is quicker than

$$A_{i-1}{:}A_{i+m} \sim B_{j-n}{:}B_{j+1} \,,$$

where $A_{i-1}{:}A_i$ represents travel along a pattern from $A_{i-1}$ to $A_i$, and $A_i \sim B_j$ represents a walking transfer from $A_i$ to $B_j$. Implicit in this determination is that any walking transfer from later along the inbound pattern to the outbound pattern must be shorter than the currently-examined walking transfer, otherwise the alternative route cannot be faster. This comparison is performed using expected travel times in this embodiment, but those skilled in the art will appreciate that other methods of determining quickness can be employed.

As walking segments between later network segments of the inbound pattern and earlier network segments of the outbound pattern have already been explored, the information required to generate these answers rapidly is readily available. Also of note, if no viable walking segments between later stops along the inbound pattern and earlier stops along the outbound pattern have been registered, then the current walking transfer is, by default, quicker than any found so far.

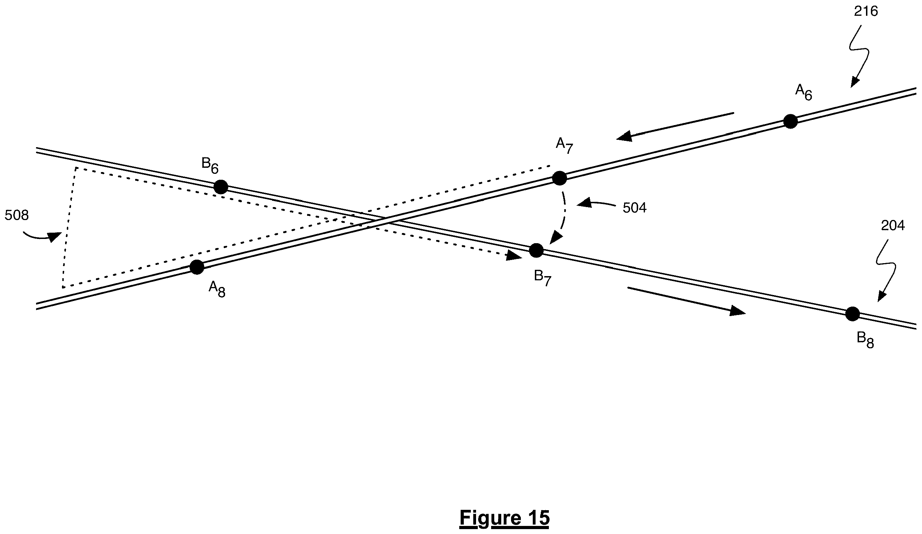

Figure 15 shows an illustrated example of this comparison for the two patterns shown in Figure 10. The illustrated example represents the general area of intersection of the inbound pattern 216 and the outbound pattern 204. In this particular example, the pattern segment $A_6{:}A_7$ is selected from the inbound pattern 216 and the pattern segment $B_7{:}B_8$ is selected from the outbound pattern 204. A walking transfer 504 from the end of the selected inbound pattern segment to the start of the selected outbound pattern segment is being compared to an alternative route 508; that is, traveling to a later stop along the inbound pattern 216, walking to a stop on the outbound pattern 204 earlier than $B_7$, and then traveling along the outbound pattern 204 to $B_7$.

Referring again to Figures 14A and 14B, if the currently-examined pattern-transfer is not quicker than traveling further along the inbound pattern, transferring to the outbound pattern at some earlier stop thereon, then traveling along the outbound pattern to the start of the selected outbound pattern segment, then the currently-examined pattern-transfer is deemed not to be viable (408), after which the method 360 ends.

If, instead, it is determined at 404 that the currently-examined pattern-transfer from the end node of the selected inbound pattern segment is quicker than traveling further along the inbound pattern, transferring to the outbound pattern at some earlier stop thereon, then traveling along the outbound pattern to the start of the selected outbound pattern-transfer, then it is determined whether the currently-analyzed pattern-transfer is shorter than the pattern-transfer from the previous stop along the inbound pattern to the same stop on the outbound pattern (412). That is, whether

$$A_{i-1} \sim B_j$$

is shorter than

$$A_i \sim B_j .$$

If the pattern-transfer $A_{i-1} \sim B_j$ is deemed to exceed the maximum walking distance during 340, then $A_i \sim B_j$ is deemed to be shorter, by default.

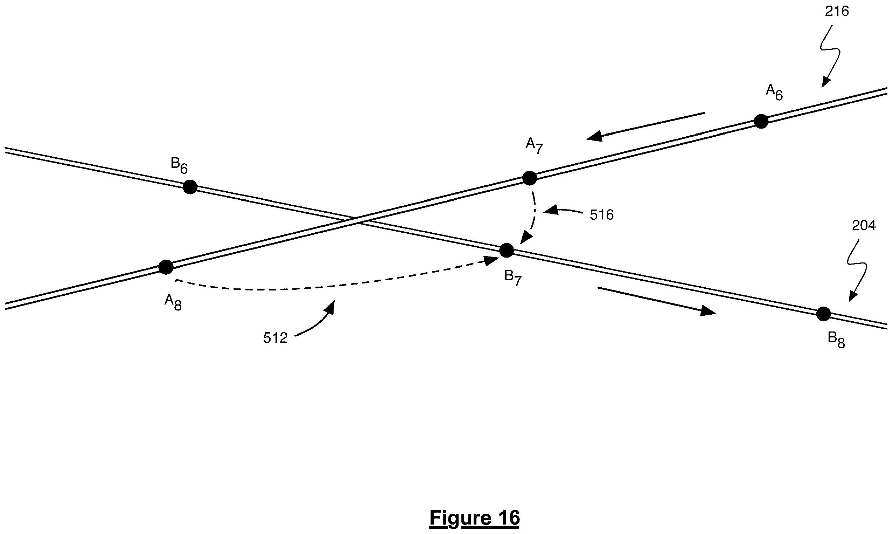

Figure 16 shows an illustrated example of this comparison. The illustrated example represents the general area of intersection of the inbound pattern 216 and the outbound pattern 204. In particular, the inbound pattern segment $A_7:A_8$ and the outbound pattern segment $B_7:B_8$ are selected. The walking distance for the currently-examined pattern-transfer 512 from the end of the selected inbound pattern segment to the start of the selected outbound pattern segment is being compared to that for the pattern-transfer 516 from the start of the selected inbound pattern segment. As the choice here is "travel further along the inbound pattern from $A_7$ to $A_8$, then walk to $B_7$" versus "walk directly from $A_7$ to $B_7$", the first option must involve less walking in order for it to be attractive in any way over directly walking from $A_7$ to $B_7$ as the first option involves further travel along the inbound pattern.

Referring again to Figures 14A and 14B, if the currently-examined pattern-transfer from the end node of the selected inbound pattern segment to the start node of the selected outbound pattern segment is longer than the pattern-transfer from the start node of the selected inbound pattern segment to the same stop on the outbound pattern, then the currently-examined pattern-transfer is deemed not to be viable (408), after which the method 360 ends.

If, instead, it is determined at 412 that the currently-examined pattern-transfer from the end node of the selected inbound pattern segment to the start node of the selected outbound pattern segment is shorter than the pattern-transfer from the start node of the selected inbound pattern segment to the same stop on the outbound pattern, then it is determined whether the currently-examined pattern-transfer from the end node of the selected inbound pattern segment to the start node of the selected outbound pattern segment is shorter than the pattern-transfer from the end node of the selected inbound pattern segment to the end node of the selected outbound pattern segment (416). That is, whether

$$A_i \sim B_j$$

is shorter than

$$A_i \sim B_{j+1} .$$

If the pattern-transfer $A_i \sim B_{j+1}$ is deemed to exceed the maximum walking distance during 340, then $A_i \sim B_j$ is deemed to be shorter, by default.

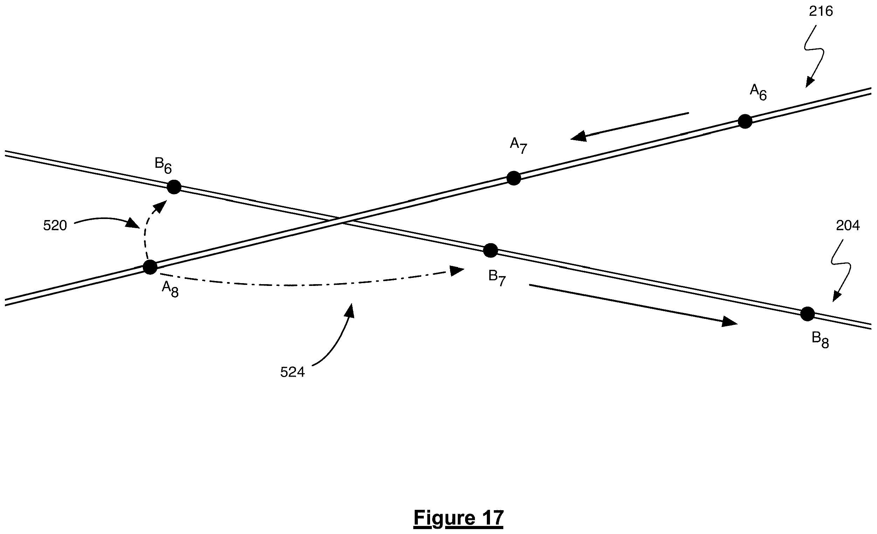

Figure 17 shows an illustrated example of this comparison. The illustrated example represents the general area of intersection of the inbound pattern 216 and the outbound pattern 204. In particular, the inbound pattern segment $A_7:A_8$ and the outbound pattern segment $B_6:B_7$ are selected. The walking distance for the currently-examined pattern-transfer 520 from the end node of the selected inbound pattern segment to the start node of the selected outbound pattern segment is being compared to that for the pattern-transfer 524 from the end node of the selected inbound pattern segment to the end node of the selected outbound pattern segment. As the choice here is "walk from $A_8$ to $B_6$ then travel along the outbound pattern from $B_6$ to $B_7$" versus "walk directly from $A_8$ to $B_7$", the first option must involve less walking in order for it to be attractive in any way over directly walking from $A_8$ to $B_7$ as the first option involves additional travel along the outbound pattern.

Referring again to Figures 14A and 14B, if the currently-examined pattern-transfer from the end node of the selected inbound pattern segment to the start node of the selected outbound pattern segment is longer than the pattern-transfer from the end node of the selected inbound pattern segment to the end node of the selected outbound pattern segment, then the currently-examined pattern-transfer is deemed not to be viable (408), after which the method 360 ends.

If, instead, it is determined at 416 that the currently-examined pattern-transfer from the end node of the selected inbound pattern segment to the start node of the selected inbound pattern segment is shorter than the pattern-transfer from the end node of the selected inbound pattern segment to the end node of the selected outbound pattern segment, then it is determined whether the pattern-transfer from the end node of the selected inbound pattern segment to the start node of the selected outbound pattern segment is shorter than the pattern-transfer from the start node of the selected inbound pattern segment to the end node of the selected outbound pattern segment (420). That is, whether

$$A_i \sim B_j$$

is shorter than

$$A_{i-1} \sim B_{j+1} .$$

If the pattern-transfer $A_{i-1} \sim B_{j+1}$ is deemed to exceed the maximum walking distance during 340, then $A_i \sim B_j$ is deemed to be shorter, by default.

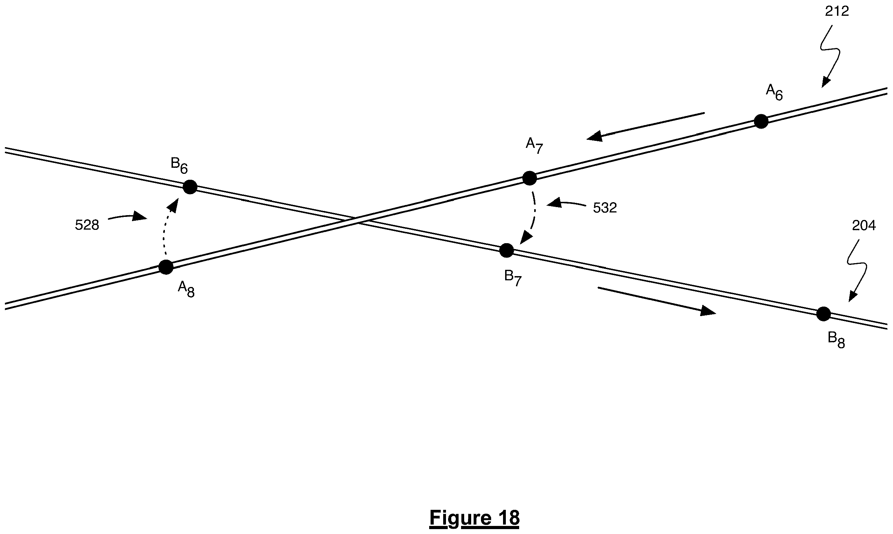

Figure 18 shows an illustrated example of this comparison. The illustrated example represents the general area of intersection of the inbound pattern 216 and the outbound pattern 204. In particular, the pattern segment $A_7:A_8$ is selected from the inbound pattern 216 and the pattern segment $B_6:B_7$ is selected from the outbound pattern 204. The walking distance for the currently-examined pattern-transfer 528 from the end node of the selected inbound pattern segment to the start node of the selected outbound pattern segment is being compared to that for the pattern-transfer 532 from the start node of the selected inbound pattern segment to the end node of the selected outbound pattern segment. As the choice here is "travel along the inbound pattern from $A_7$ to $A_8$, then walk from $A_8$ to $B_6$, then travel along the outbound pattern from $B_6$ to $B_7$" versus "walk directly from $A_7$ to $B_7$", the first option must involve less walking in order for it to be attractive in any way over directly walking from $A_7$ to $B_7$ as the first option involves further travel along both the inbound and outbound patterns.

Referring again to Figures 14A and 14B, if the currently-examined pattern-transfer from the end node of the selected inbound pattern segment to the start node of the selected outbound pattern segment is longer than the pattern-transfer from the start node of the selected inbound pattern segment to the end node of the selected outbound pattern segment, then the currently-examined pattern-transfer is deemed not to be viable (408), after which the method 360 ends.

If, instead, it is determined at 420 that the correctly-examined pattern-transfer from the end node of the selected inbound pattern segment to the start node of the selected outbound pattern segment is shorter than the pattern-transfer from the start node of the selected inbound pattern segment to the end node of the selected outbound pattern segment, then it is determined whether the expected time to travel across the selected inbound pattern segment, walk to the start node of the selected outbound pattern segment via the currently-examined pattern-transfer, then travel across the selected outbound pattern segment is shorter than the expected travel time to walk directly from the start node of the selected inbound pattern segment to the end node of the selected outbound pattern segment (424). That is, whether the expected travel time for

$$A_{i-1}{:}A_i \sim B_j{:}B_{j+1}$$

is lower than for

$$A_{i-1} \sim B_{j+1} \, .$$

One scenario addressed here is where $A_{i-1}{:}A_i$ and $B_j{:}B_{j+1}$ essentially travel along the same road, and $A_{i-1}$ and $B_{j+1}$ represent stops on opposite sides of the road.

Returning again to Figure 18, an illustrated example of this comparison is shown. The expected time to travel along the selected inbound pattern segment $A_7{:}A_8$, walk from $A_8$ to $B_6$ via the currently-examined pattern-transfer, then travel along the selected outbound pattern segment $B_6{:}B_7$ must be shorter than the expected walk time of the pattern-transfer 532 from $A_7$ to $B_7$.

Referring again to Figures 14A and 14B, if the expected time to travel across the selected inbound pattern segment, walk across the currently-examined pattern-transfer to the start node of the selected outbound pattern segment, then travel across the selected outbound pattern segment is longer than the expected travel time to walk directly from the start node of the selected inbound pattern segment to the end node of the selected outbound pattern segment, then the currently-examined pattern-transfer is deemed not to be viable (408), after which the method 360 ends.

If, instead, it is determined at 424 that the expected time to travel across the selected inbound pattern segment, walk to the start node of the selected outbound pattern segment via the currently-examined pattern-transfer, then travel across the selected outbound pattern segment is shorter than the expected travel time to walk directly from the start node of the selected inbound pattern segment to the end node of the selected outbound pattern segment, then it is determined whether traveling across the selected inbound pattern segment then walking to the start node of the selected outbound pattern segment via the currently-examined pattern-transfer is expected to be quicker or involves less walking than walking from the start node of the selected inbound pattern segment to a stop along the outbound pattern and traveling along the outbound pattern to the start node of the selected outbound pattern segment (428). That is, whether

$$A_{i-1}{:}A_i \sim B_j$$

is expected to be quicker or involves less walking than

$$A_{i-1} \sim B_{j-n}{:}B_j \, .$$

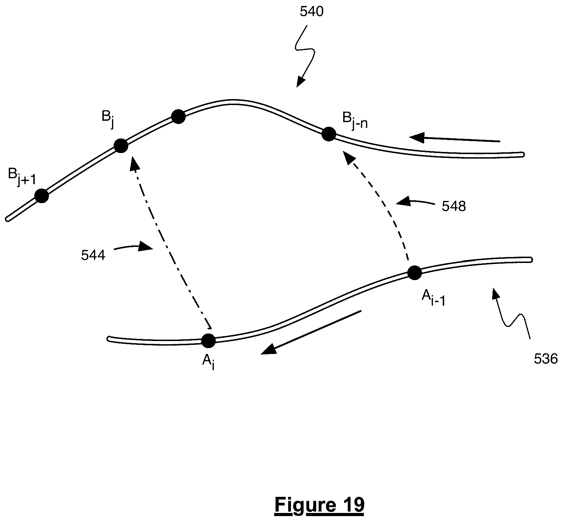

Figure 19 shows an illustrated example of this comparison. An inbound pattern 536 and an outbound pattern 540 are shown. Using the same notation as above, the selected inbound pattern segment is $A_{i-1}{:}A_i$ and the selected outbound pattern segment is $B_j{:}B_{j+1}$. Traveling along the selected inbound pattern segment and walking to the start node of the selected outbound segment via the currently-examined pattern-transfer 544 must either have a shorter expected travel time or involve less walking than walking from the start node, $A_{i-1}$, of the selected inbound pattern segment to an arbitrary node, $B_{j-n}$, along the outbound pattern via walking transfer 548 and then traveling along the outbound pattern to the start node, $B_j$, of the selected outbound pattern segment.

Referring again to Figures 14A and 14B, if traveling across the selected inbound pattern segment then walking to the start node of the selected outbound pattern segment via the currently-examined pattern-transfer is expected to be slower and involves more walking than walking from the start node of the selected inbound pattern segment to a stop along the outbound pattern and traveling along the outbound pattern to the start node of the selected outbound pattern segment, then the currently-examined pattern-transfer is deemed not to be viable (408), after which the method 360 ends.

If, instead, it is determined to 428 that traveling across the selected inbound pattern segment then walking to the start node of the selected outbound pattern segment via the currently-examined pattern-transfer is expected to be quicker or involves less walking than walking from the start node of the selected inbound pattern segment to a stop along the outbound pattern and traveling along the outbound pattern to the start node of the selected outbound pattern segment, then it is determined whether walking from the end node of the selected inbound pattern segment to the start node of the selected outbound pattern segment and then traveling along the selected outbound pattern segment is expected to be quicker or involves less walking than traveling further along the inbound pattern and then walking to the end node of the selected outbound pattern segment (432). That is, whether

$$A_i \sim B_j{:}B_{j+1}$$

is expected to be quicker or involves less walking than

$$A_i{:}A_{i+m} \sim B_{j+1} \text{, for any m.}$$

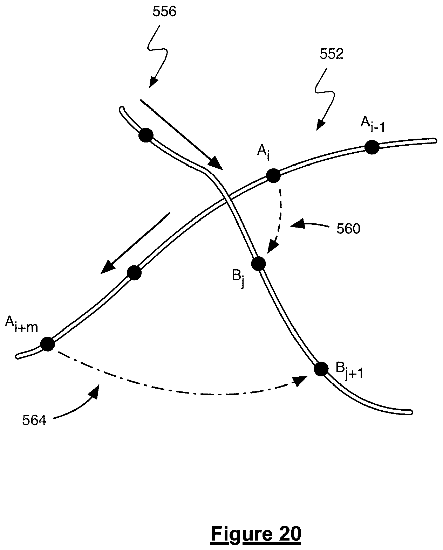

Figure 20 shows an illustrated example of this comparison. An inbound pattern 552 and an outbound pattern 556 are shown. Using the same notation as above, the selected inbound pattern segment is $A_{i-1}{:}A_i$ and the selected outbound pattern segment is $B_j{:}B_{j+1}$. Walking from the end node of the selected inbound segment to the start node of the selected outbound pattern segment via the currently-examined pattern-transfer 560 then traveling along the selected outbound pattern segment must either have a shorter expected travel time or involve less walking than traveling further along the inbound pattern from the end node of the selected inbound pattern segment and then walking to the end node, $B_{j+1}$, of the selected outbound pattern segment via a pattern-transfer 564.

Referring again to Figures 14A and 14B, if walking from the end node of the selected inbound pattern segment to the start node of the selected outbound pattern segment via the currently-examined pattern-transfer and then traveling along the selected outbound pattern segment is expected to be slower and involves more walking than traveling further along the inbound pattern and then walking to the end node of the selected outbound pattern segment, then the currently-examined pattern-transfer is deemed not to be viable (408), after which the method 360 ends.

If, instead, it is determined at 432 that walking from the end node of the selected inbound pattern segment to the start node of the selected outbound pattern segment via the currently-examined pattern-transfer and then traveling along the selected outbound pattern segment is expected to be quicker or involves less walking than traveling further along the inbound pattern and then walking to the end node of the selected outbound pattern segment, then the currently-examined pattern-transfer is deemed to be viable (436), after which the method 360 ends.

Returning to Figure 11, if the currently-examined pattern-transfer is deemed viable at 360, it is placed in a viable pattern-transfer set that is stored in storage (370). As the currently-examined pattern-transfer is not discarded during 350 or 360, it is deemed viable.

Once the correctly-examined pattern-transfer is either discarded or registered in the viable pattern-transfer set, it is determined if there are remaining pattern segments in the inbound queue (380). If there are, the last remaining pattern segment in the inbound queue is selected at 330, and the process of analyzing a pair of pattern segments is repeated.

If, instead, it is determined at 380 that there are no remaining inbound pattern segments, it is then determined if there are remaining outbound pattern segments in the outbound queue (380). If there are, then the inbound pattern segments are placed in the inbound queue again at 315, and the process of analyzing pairs of pattern segments repeats.

Once all of the viable pattern-transfers from one of the patterns to the other have been identified and placed in the viable pattern-transfer set at 140, the role of the patterns in the pair of proximate patterns is switched and viable pattern-transfers between the patterns are determined, if any (150). That is, the outbound pattern is made the inbound pattern, and the inbound pattern is made the outbound pattern. The process for determining viable pattern-transfers here is the same as described with respect to 140 above.

After identifying viable pattern-transfers between the patterns, it is determined if there are any unanalyzed identified pairs of proximate patterns in the proximate patterns list (160). If there are, the method 100 returns to 130, at which an unanalyzed pair of proximate patterns is selected to identify viable pattern-transfers between the patterns.

Once it is determined that there are no remaining unanalyzed pairs of proximate patterns at 160, the method 100 ends.

While, in the described embodiment, the computer system for generating viable pattern-transfers is described as a separate physical machine from the itinerary-planning system, those skilled in the art will appreciate that they can reside on the same computer system. Alternatively, each of the computer systems for generating viable pattern-transfers and the itinerary-planning system can be one or more computer systems cooperatively providing the functionality described herein.

Instead of performing generalized itinerary queries for each stop on the outbound patterns to locate proximate stops along other patterns, in an alternative embodiment, itinerary queries are performed between stops along the inbound patterns and stops along the outbound patterns. Additionally, if an estimated straight-line distance between a stop along an inbound pattern and a stop along an outbound pattern exceeds a threshold maximum distance, the itinerary query may be skipped.

A range of durations may be recorded in the viable pattern-transfer set stored in storage. In some cases, the durations for some patterns can vary during the course of the day, depending on traffic conditions, etc. It can be beneficial to register a range in some circumstances to assist in identifying more suitable itinerary solutions.

Other attributes of pattern-transfers, such as gradients, can be registered in the viable pattern-transfer set and used to help select one or more suitable itinerary solutions for an itinerary query generated at runtime.

Some pattern-transfers may be pre-defined as part of the travel network. Such pre-defined pattern-transfers may be used for complex interchanges, possibly involving stairs or lifts, such as at rail stations, or areas where it is impractical to define a walking network. Where a pattern transfer is pre-defined, it can be made to take precedence over any automatically-generated pattern-transfers. In such cases, the transfer duration can be fixed and independent of any walking speed specified that is used to calculate the duration of pattern-transfers generated by the system.

Computer-executable instructions for implementing the itinerary-planning software on a computer system could be provided separately from the computer system, for example, on a computer-readable medium (such as, for example, an optical disk, a hard disk, a USB drive or a media card) or by making them available for downloading over a communications network, such as the Internet.

While the computer system is shown as a single physical computer, it will be appreciated that the computer system can include two or more physical computers in communication with each other. Accordingly, while the embodiment shows the various components of the itinerary-planning software residing on the same physical computer, those skilled in the art will appreciate that the components can reside on separate physical computers.

This concludes the description of the presently preferred embodiments of the invention. The foregoing description has been presented for the purpose of illustration and is not intended to be exhaustive or to limit the invention to the precise form disclosed. It is intended the scope of the invention be limited not by this description but by the claims that follow.

**Claims**

1. A computer-implemented method for generating viable pattern-transfers for an itinerary-planning system, comprising:

identifying pairs of patterns along fixed transit routes in a travel network database (24) that are proximate one another, each of said patterns comprising a number of stops connected by pattern segments traveled in a specific order;
identifying pattern-transfers between said stops along an inbound pattern of said pairs and said stops along an outbound pattern of said pairs;
discarding at least one of said pattern-transfers if traveling from said inbound pattern to said outbound pattern via said at least one of said pattern-transfers is unadvantageous compared to traveling from said inbound pattern to said outbound pattern via at least one other of said pattern-transfers; and
storing undiscarded pattern-transfers in storage for use by an itinerary-planning system.

2. The method of claim 1, wherein said pattern-transfers traverse a walking network.

3. The method of claim 2, wherein said identifying pattern-transfers comprises:
determining if said pattern-transfers between one of said stops along said inbound pattern and stops along said outbound pattern and other patterns have been previously identified.

4. The method of claim 3, wherein said identifying pattern-transfers further comprises:
performing an itinerary query over a walking network to identify said pattern-transfers between said one stop along said inbound pattern and stops proximate said one stop along said outbound pattern and other patterns if said pattern-transfers have not been identified for said one stop along said inbound pattern.

5. The method of claim 4, wherein said itinerary query includes said one stop along said inbound pattern as an origin, an arbitrary location relatively distant from said one stop as a destination and a specified maximum walking distance.

6. The method of claim 5, wherein said itinerary query includes an arbitrary departure time.

7. The method of claim 5, wherein said identified pattern-transfers are registered in a node-connection map.

8. The method of claim 7, wherein said node-connection map indicates that said itinerary query was performed for said one stop along said inbound pattern.

9. The method of claim 8, wherein said determining comprises:
determining if said itinerary query has been performed for said one stop.

**10.** The method of claim 2, wherein said identifying pattern-transfers comprises:
performing an itinerary query over a walking network to identify said pattern-transfers available at a stop along segment between one of said stops on said first pattern and one of said stops on said second pattern.

**11.** The method of claim 1, wherein said discarding comprises:
identifying at least one alternate route from said inbound pattern to said outbound pattern via other pattern-transfers having a shorter expected travel time and walking distance than via said at least one pattern-transfers.

**12.** The method of claim 1, wherein said discarding comprises:

selecting outbound pattern segments along said outbound pattern, commencing with a first of said outbound pattern segments and subsequently selecting immediately-subsequent outbound pattern segments; and
selecting inbound pattern segments along said inbound pattern, commencing with a last of said inbound pattern segments and subsequently selecting immediately-preceding inbound pattern segments.

**13.** The method of claim 12, wherein said discarding further comprises:
evaluating transferring from said inbound pattern to said outbound pattern via said pattern-transfers bridging from the end of said selected inbound pattern segments to the start of said selected outbound pattern segments in comparison to transferring from said inbound pattern to said outbound pattern via said pattern-transfers bridging from the end of previously-selected inbound pattern segments to the start of said previously-selected outbound pattern segments.

**14.** The method of claim 13, wherein said discarding further comprises:
discarding said pattern-transfers bridging from the end of said selected inbound pattern segments to the start of said selected outbound pattern segments if transferring from said inbound pattern to said outbound pattern via said pattern-transfers bridging from the end of said selected inbound pattern segments to the start of said selected outbound pattern segments is unadvantageous in comparison to transferring from said inbound pattern to said outbound pattern via said pattern-transfers bridging from the end of said previously-selected inbound pattern segments to the start of said previously-selected outbound pattern segments.

**15.** The method of claim 13, wherein said discarding further comprises:
discarding said pattern-transfers between said selected inbound pattern segments to the start of said selected outbound pattern segments if transferring from said inbound pattern to said outbound pattern via said pattern-transfers bridging from the end of said selected inbound pattern segments to the start of said selected outbound pattern segments is unadvantageous in comparison to transferring from said inbound pattern to said outbound pattern via said pattern-transfers bridging from the end of said previously-selected inbound pattern segments and said previously-selected outbound pattern segments.

**16.** The method of claim 13, wherein said discarding further comprises:
discarding said pattern-transfers bridging from the end of said selected inbound pattern segments to the start of said selected outbound pattern segments if said pattern-transfers bridging from the end of said selected inbound pattern segments to the start of said selected outbound pattern segments are longer than said pattern-transfers bridging from the start of said selected inbound pattern segments to the start of said previously-selected outbound pattern segments.

**17.** The method of claim 13, wherein said discarding further comprises:
discarding said pattern-transfers bridging from the end of said selected inbound pattern segments to the start of said selected outbound pattern segments if said pattern-transfers bridging from the end of said selected inbound pattern segments to the start of said selected outbound pattern segments are longer than said pattern-transfers bridging from the end of said selected inbound pattern segments to the end of said selected outbound pattern segments.

**18.** The method of claim 13, wherein said discarding further comprises:
discarding said pattern-transfers bridging from the end of said selected inbound pattern segments to the start of said selected outbound pattern segments if said pattern-transfers bridging from the end of said selected inbound pattern segments to the start of said selected outbound pattern segments are longer than said pattern-transfers bridging from the start of said selected inbound pattern segments to the end of said selected outbound pattern segments.

**19.** The method of claim 13, wherein said discarding further comprises:
discarding said pattern-transfers bridging from the end of said selected inbound pattern segments to the start of said selected outbound pattern segments if transferring from said inbound pattern to said outbound pattern via said pattern-transfers bridging from the end of said selected inbound pattern segments to the start of said selected outbound pattern segments is slower than transferring from said inbound pattern to said outbound pattern via said pattern-transfers bridging from the start of said selected inbound pattern segments to the end of said selected outbound pattern segments.

20. The method of claim 13, wherein said discarding further comprises:

discarding said pattern-transfers bridging from the end of said selected inbound pattern segments to the start of said selected outbound pattern segments if traveling along said selected inbound segments and transferring from said inbound pattern to said outbound pattern via said pattern-transfers bridging from the end of said selected inbound pattern segments to the start of said selected outbound pattern segments is unadvantageous in comparison to transferring from said inbound pattern to said outbound pattern at the start of said selected inbound pattern segments and traveling along said outbound pattern to the start of said selected outbound pattern segments.

21. The method of claim 13, wherein said discarding further comprises:

discarding said pattern-transfers bridging from the end of said selected inbound pattern segments to the start of said selected inbound pattern segments if transferring from said inbound pattern to said outbound pattern via said pattern-transfers bridging from the end of said selected inbound pattern segments to the start of said selected outbound pattern segments and traveling along said selected outbound pattern segments is unadvantageous in comparison to traveling further along said inbound pattern past the end of said selected inbound pattern segments and then transferring from said inbound pattern to said outbound pattern via said pattern-transfers bridging to the end of said selected outbound pattern segments.

22. The method of claim 1, wherein said identifying pairs of patterns comprises:

determining that said pairs of patterns are proximate one another if rectangles bounding said patterns in said pair overlap or are proximate one another.

23. A computer system (209 for generating viable pattern-transfers for an itinerary-planning system (28), comprising: a processor executing computer-readable instructions for identifying pairs of patterns along fixed transit routes in a travel network database (24) that are proximate one another, each of said patterns comprising a number of stops connected by pattern segments traveled in a specific order, identifying pattern-transfers between said stops along an inbound pattern of said pairs and said stops along an outbound pattern of said pairs, discarding at least one of said pattern-transfers if traveling from said inbound pattern to said outbound pattern via said at least one of said pattern-transfers is unadvantageous compared to traveling from said inbound pattern to said outbound pattern via at least one other of said pattern-transfers, and storing said undiscarded pattern-transfers in storage accessible to said computer system for use by an itinerary-planning system.

**Patentansprüche**

1. Computerimplementiertes Verfahren zum Erzeugen von funktionsfähigen Mustertransfers für ein Reiseplanungssystem, umfassend:

Identifizieren von Paaren von Mustern entlang von festen Transitrouten in einer Reise-Netzwerk-Datenbank (24), welche zueinander benachbart sind, wobei jedes der Muster eine Anzahl von Stops umfasst, welche durch Mustersegmente verbunden sind, welche in einer bestimmten Reihenfolge befahren werden;
Identifizieren von Mustertransfers zwischen den Stops entlang eines Eingangsmusters der Paare und den Stops entlang eines Ausgangsmusters der Paare;
Verwerfen mindestens eines der Mustertransfers, wenn ein Reisen von dem Eingangsmuster zu dem Ausgangsmuster über den mindestens einen der Mustertransfers im Vergleich zu einem Reisen von dem Eingangsmuster zu dem Ausgangsmuster über mindestens einen anderen der Mustertransfers ungünstig ist; und
Speichern von nicht verworfenen Mustertransfers zur Verwendung durch ein Reiseplanungssystem.

2. Verfahren nach Anspruch 1, wobei die Mustertransfers ein Gehnetzwerk durchlaufen.

3. Verfahren nach Anspruch 2, wobei das Identifizieren von Mustertransfers umfasst:
Bestimmen, ob die Mustertransfers zwischen einem der Stops entlang des Eingangsmusters und Stops entlang des Ausgangsmusters und anderer Muster zuvor identifiziert wurden.

4. Verfahren nach Anspruch 3, wobei das Identifizieren von Mustertransfers weiter umfasst:
Ausführen einer Routenabfrage über ein Laufnetzwerk, um die Mustertransfers zwischen dem einen Stop entlang des Eingangsmusters und Stops in der Nähe des einen Stops entlang des Ausgangsmusters und anderer Muster zu identifizieren, wenn die Mustertransfers nicht für den einen Stop entlang des Eingangsmusters identifiziert wurden.

5. Verfahren nach Anspruch 4, wobei die Routenabfrage den einen Stop entlang des Eingangsmusters als Ursprung, einen beliebigen Ort, welcher relativ weit von dem einen Stop entfernt ist, als Ziel und eine bestimmte maximale Gehstrecke umfasst.

6. Verfahren nach Anspruch 5, wobei die Routenabfrage eine beliebige Abfahrtszeit enthält.

7. Verfahren nach Anspruch 5, wobei die identifizierten Mustertransfers in einer Knotenverbindungskarte registriert werden.

8. Verfahren nach Anspruch 7, wobei die Knotenverbindungskarte anzeigt, dass die Routenabfrage für den einen Stop entlang des Eingangsmusters durchgeführt wurde.

9. Verfahren nach Anspruch 8, wobei das Bestimmen umfasst:
Bestimmen, ob die Routenabfrage für den einen Stop durchgeführt wurde.

10. Verfahren nach Anspruch 2, wobei das Identifizieren von Mustertransfers umfasst:
Ausführen einer Routenabfrage über ein Gehnetzwerk, um die Mustertransfers zu identifizieren, welche an einem Stop entlang Segment zwischen einem der Stops auf dem ersten Muster und einem der Stops auf dem zweiten Muster verfügbar sind.

11. Verfahren nach Anspruch 1, wobei das Verwerfen umfasst:
Identifizieren mindestens einer alternativen Route von dem Eingangsmuster zu dem Ausgangsmuster über andere Mustertransfers mit kürzerer erwarteten Reisezeit und Gehstrecke als über den mindestens einen Mustertransfer.

12. Verfahren nach Anspruch 1, wobei das Verwerfen umfasst:

Auswählen von Ausgangsmustersegmenten entlang des Ausgangsmusters, beginnend mit einem ersten der Ausgangsmustersegmente, und anschließendes Auswählen von unmittelbar nachfolgenden Ausgangsmustersegmenten; und
Auswählen von Eingangsmustersegmenten entlang des Eingangsmusters, beginnend mit einem letzten der Eingangsmustersegmente, und anschließendes Auswählen von unmittelbar vorhergehenden Eingangsmustersegmenten.

13. Verfahren nach Anspruch 12, wobei das Verwerfen weiter umfasst:
Auswerten eines Transferierens von dem Eingangsmuster zu dem Ausgangsmuster über die Mustertransfers, welche von dem Ende der ausgewählten Eingangsmustersegmente zu dem Anfang der ausgewählten Ausgangsmustersegmente führen, im Vergleich zu einem Transferieren von dem Eingangsmuster zu dem Ausgangsmuster über die Mustertransfers, welche von dem Ende der zuvor ausgewählten Eingangsmustersegmente zu dem Anfang der zuvor ausgewählten Ausgangsmustersegmente führen.

14. Verfahren nach Anspruch 13, wobei das Verwerfen weiter umfasst:
Verwerfen der Mustertransfers, welche von dem Ende der ausgewählten Eingangsmustersegmente zu dem Anfang der ausgewählten Ausgangsmustersegmente führen, wenn ein Transferieren von dem Eingangsmuster zu dem Ausgangsmuster über die Mustertransfers, welche von dem Ende der ausgewählten Eingangsmustersegmente zu dem Anfang der ausgewählten Ausgangsmustersegmente führen, im Vergleich zu einem Transferieren von dem Eingangsmuster zu dem Ausgangsmuster über die Mustertransfers, welche von dem Ende der zuvor ausgewählten Eingangsmustersegmente zu dem Anfang der zuvor ausgewählten Ausgangsmustersegmente führen, ungünstig ist.

15. Verfahren nach Anspruch 13, wobei das Verwerfen weiter umfasst:
Verwerfen der Mustertransfers zwischen den ausgewählten Eingangsmustersegmenten zu dem Anfang der ausgewählten Ausgangsmustersegmente, wenn ein Transferieren von dem Eingangsmuster zu dem Ausgangsmuster über die Mustertransfers, welche von dem Ende der ausgewählten Eingangsmustersegmente zu dem Anfang der ausgewählten Mustersegmente führen, im Vergleich zu einem Transferieren von dem Eingangsmuster zu dem Ausgangsmuster über die Mustertransfers, welche von dem Ende der zuvor ausgewählten Eingangsmustersegmente und der zuvor ausgewählten Ausgangsmustersegmente führen, ungünstig ist.

16. Verfahren nach Anspruch 13, wobei das Verwerfen weiter umfasst:
Verwerfen der Mustertransfers, welche von dem Ende der ausgewählten Eingangsmustersegmente zu dem Anfang der ausgewählten Ausgangsmustersegmente führen, wenn die Mustertransfers, welche von dem Ende der ausgewählten Eingangsmustersegmente zu dem Anfang der ausgewählten Ausgangsmustersegmente führen, länger sind als die Mustertransfers, welche von dem Anfang der ausgewählten Eingangsmustersegmente zu dem Anfang der zuvor ausgewählten Ausgangsmustersegmente führen.

17. Verfahren nach Anspruch 13, wobei das Verwerfen weiter umfasst:
Verwerfen der Mustertransfers, welche von dem Ende der ausgewählten Eingangsmustersegmente zu dem Anfang der ausgewählten Ausgangsmustersegmente führen, wenn die Mustertransfers, welche von dem Ende der ausgewählten Eingangsmustersegmente zu dem Anfang der ausgewählten Ausgangsmustersegmente führen, länger sind als die Mustertransfers, welche von dem Ende der ausgewählten Eingangsmustersegmente zu dem Ende der ausgewählten Ausgangsmustersegmente führen.

18. Verfahren nach Anspruch 13, wobei das Verwerfen weiter umfasst:
Verwerfen der Mustertransfers, welche von dem Ende der ausgewählten Eingangsmustersegmente zu dem Anfang der ausgewählten Ausgangsmustersegmente führen, wenn die Mustertransfers, welche von dem Ende der ausgewählten Eingangsmustersegmente zu dem Anfang der ausgewählten Ausgangsmustersegmente führen, länger sind als die Mustertransfers, welche von dem Anfang der ausgewählten Eingangsmustersegmente zu dem Ende der ausgewählten Ausgangsmustersegmente führen.

19. Verfahren nach Anspruch 13, wobei das Verwerfen weiter umfasst:
Verwerfen der Mustertransfers, welche von dem Ende der ausgewählten Eingangsmustersegmente zu dem Anfang der ausgewählten Ausgangsmustersegmente führen, wenn ein Transferieren von dem Eingangsmuster zu dem Ausgangsmuster über die Mustertransfers, welche von dem Ende der ausgewählten Eingangsmustersegmente zu dem Anfang der ausgewählten Ausgangsmustersegmente führen, langsamer ist als ein Transferieren von dem Eingangsmuster zu dem Ausgangsmuster über die Mustertransfers, welche von dem Anfang der ausgewählten Eingangsmustersegmente zu dem Ende der ausgewählten Ausgangsmustersegmente führen.

20. Verfahren nach Anspruch 13, wobei das Verwerfen weiter umfasst:
Verwerfen der Mustertransfers, welche von dem Ende der ausgewählten Eingangsmustersegmente zu dem Anfang der ausgewählten Ausgangsmustersegmente führen, wenn ein Reisen entlang der ausgewählten Eingangssegmente und ein Transferieren von dem Eingangsmuster zu dem Ausgangsmuster über die Mustertransfers, welche von dem Ende der ausgewählten Eingangsmustersegmente zu dem Anfang der ausgewählten Ausgangsmustersegmente führen, im Vergleich zu einem Transferieren von dem Eingangsmuster zu dem Ausgangsmuster am Anfang der ausgewählten Eingangsmustersegmente und einem Reisen entlang dem Ausgangsmuster zu dem Anfang der ausgewählten Ausgangsmustersegmente ungünstig ist.

21. Verfahren nach Anspruch 13, wobei das Verwerfen weiter umfasst:
Verwerfen der Mustertransfers, welche von dem Ende der ausgewählten Eingangsmustersegmente zu dem Anfang der ausgewählten Eingangsmustersegmente führen, wenn ein Transferieren von dem Eingangsmuster zu dem Ausgangsmuster über die Mustertransfers, welche von dem Ende der ausgewählten Eingangsmustersegmente zu dem Anfang der ausgewählten Ausgangsmustersegmente führen und ein Reisen entlang der ausgewählten Ausgangsmustersegmente im Vergleich zu einem Weiterreisen entlang des Eingangsmusters über das Ende der ausgewählten Eingangsmustersegmente hinaus und einem darauffolgenden Transferieren von dem Eingangsmuster zu dem Ausgangsmuster über die Mustertransfers, welche zu dem Ende der ausgewählten Ausgangsmustersegmente führen, ungünstig ist.

22. Verfahren nach Anspruch 1, wobei das Identifizieren von Paaren von Mustern umfasst:
Bestimmen, dass die Musterpaare nahe beieinander liegen, wenn sich Rechtecke, welche die Muster in dem Paar begrenzen, überlappen oder nahe beieinander liegen.

23. Computersystem (209) zum Erzeugen von funktionsfähigen Mustertransfers für ein Reiseplanungssystem (28), umfassend:
einen Prozessor, welcher computerlesbare Befehle zu dem Identifizieren von Paaren von Mustern entlang fester Transitrouten in einer Reise-Netzwerk-Datenbank (24) ausführt, welche zueinander benachbart sind, wobei jedes der Muster eine Anzahl von Stops umfasst, welche durch Mustersegmente verbunden sind, welche in einer bestimmten Reihenfolge befahren werden, welcher die Mustertransfers zwischen den Stops entlang eines Eingangsmusters der Paare und den Stops entlang eines Ausgangsmusters der Paare identifiziert, welcher mindestens einen der Mustertransfers verwirft, wenn ein Reisen von dem Eingangsmuster zu dem Ausgangsmuster über den mindestens einen der Mustertransfers im Vergleich zu einem Reisen von dem Eingangsmuster zu dem Ausgangsmuster über mindestens einen anderen der Mustertransfers ungünstig ist, und der die nicht verworfenen Mustertransfers in einem für das Computersystem zugänglichen Speicher zur Verwendung durch ein Reiseplanungssystem speichert.

**Revendications**

1. Procédé mis en oeuvre par ordinateur pour générer des transferts de parcours viables pour un système de planification d'itinéraires, comprenant le fait :

   d'identifier des paires de parcours le long de voies de transit fixes, qui sont à proximité les unes des autres, dans une base de données de réseau routier (24), chacun desdits parcours comprenant un certain nombre d'arrêts reliés par des segments de parcours parcourus dans un ordre spécifique ;
   d'identifier des transferts de parcours entre lesdits arrêts le long d'un parcours entrant desdites paires et lesdits arrêts le long d'un parcours sortant desdites paires ;
   d'éliminer au moins l'un desdits transferts de parcours si le déplacement dudit parcours entrant vers ledit parcours sortant via ledit au moins l'un desdits transferts de parcours est désavantageux par rapport au déplacement dudit parcours entrant vers ledit parcours sortant via au moins un autre desdits transferts de parcours ; et
   de stocker des transferts de parcours éliminés dans une unité de stockage pour une utilisation par un système de planification d'itinéraires.

2. Procédé de la revendication 1, dans lequel lesdits transferts de parcours traversent un réseau pédestre.

3. Procédé de la revendication 2, dans lequel ladite identification de transferts de parcours comprend le fait :
   de déterminer si lesdits transferts de parcours entre l'un desdits arrêts le long dudit parcours entrant et desdits arrêts le long dudit parcours sortant et d'autres parcours ont été précédemment identifiés.

4. Procédé de la revendication 3, dans lequel l'identification desdits transferts de parcours comprend en outre le fait :
   d'effectuer une demande d'itinéraire sur un réseau pédestre pour identifier lesdits transferts de parcours entre ledit arrêt le long dudit parcours entrant et lesdits arrêts se trouvant à proximité dudit arrêt le long dudit parcours sortant et d'autres parcours si lesdits transferts de parcours n'ont pas été identifiés pour ledit arrêt le long dudit parcours entrant.

5. Procédé de la revendication 4, dans lequel ladite demande d'itinéraire comporte ledit arrêt le long dudit parcours entrant en tant qu'origine, un emplacement arbitraire relativement éloigné dudit arrêt en tant que destination et une distance de marche maximale spécifiée.

6. Procédé de la revendication 5, dans lequel ladite demande d'itinéraire comporte un instant de départ arbitraire.

7. Procédé de la revendication 5, dans lequel lesdits transferts de parcours identifiés sont enregistrés dans une carte de connexion de noeuds.

8. Procédé de la revendication 7, dans lequel ladite carte de connexion de noeuds indique que ladite demande d'itinéraire a été effectuée pour ledit arrêt le long dudit parcours entrant.

9. Procédé de la revendication 8, dans lequel ladite détermination comprend le fait :
   de déterminer si ladite demande d'itinéraire a été effectuée pour ledit arrêt.

10. Procédé de la revendication 2, dans lequel ladite identification desdits transferts de parcours comprend le fait :
    d'effectuer une demande d'itinéraire sur un réseau pédestre pour identifier lesdits transferts de parcours disponibles à un arrêt le long d'un segment entre l'un desdits arrêts sur ledit premier parcours et l'un desdits arrêts sur ledit deuxième parcours.

11. Procédé de la revendication 1, dans lequel ladite élimination comprend le fait :
    d'identifier au moins une voie alternative entre ledit parcours entrant et ledit parcours sortant via d'autres transferts de parcours ayant une durée de déplacement et une distance de marche prévues plus courtes que celles via ledit au moins un transfert de parcours.

12. Procédé de la revendication 1, dans lequel ladite élimination comprend le fait :

    de sélectionner des segments de parcours sortant le long dudit parcours sortant, en commençant par un premier desdits segments de parcours sortant et en sélectionnant par la suite des segments de parcours sortant immédiatement suivants ; et
    de sélectionner des segments de parcours entrant le long dudit parcours entrant, en commençant par un dernier desdits segments de parcours entrant et en sélectionnant par la suite des segments de parcours entrant immédiatement précédents.

13. Procédé de la revendication 12, dans lequel ladite élimination comprend en outre le fait :
d'évaluer le transfert depuis ledit parcours entrant vers ledit parcours sortant via lesdits transferts de parcours menant de la fin desdits segments de parcours entrant sélectionnés au début desdits segments de parcours sortant sélectionnés par rapport au transfert depuis ledit parcours entrant vers ledit parcours sortant via lesdits transferts de parcours menant de la fin des segments de parcours entrant précédemment sélectionnés au début desdits segments de parcours sortant précédemment sélectionnés.

14. Procédé de la revendication 13, dans lequel ladite élimination comprend en outre le fait :
d'éliminer lesdits transferts de parcours menant de la fin desdits segments de parcours entrant sélectionnés au début desdits segments de parcours sortant sélectionnés si le transfert depuis ledit parcours entrant vers ledit parcours sortant via lesdits transferts de parcours menant de la fin desdits segments de parcours entrant sélectionnés au début desdits segments de parcours sortant sélectionnés est désavantageux par rapport au transfert depuis ledit parcours entrant vers ledit parcours sortant via lesdits transferts de parcours menant de la fin desdits segments de parcours entrant précédemment sélectionnés au début desdits segments de parcours sortant précédemment sélectionnés .

15. Procédé de la revendication 13, dans lequel ladite élimination comprend en outre le fait :
d'éliminer lesdits transferts de parcours entre lesdits segments de parcours entrant sélectionnés vers le début desdits segments de parcours sortant sélectionnés si le transfert depuis ledit parcours entrant vers ledit parcours sortant via lesdits transferts de parcours menant de la fin desdits segments de parcours entrant sélectionnés au début desdits segments de parcours sortant sélectionnés est désavantageux par rapport au transfert depuis ledit parcours entrant vers ledit parcours sortant via lesdits transferts de parcours menant de la fin desdits segments de parcours entrant précédemment sélectionnés et desdits segments de parcours sortant précédemment sélectionnés.

16. Procédé de la revendication 13, dans lequel ladite élimination comprend en outre le fait :
d'éliminer lesdits transferts de parcours menant de la fin desdits segments de parcours entrant sélectionnés au début desdits segments de parcours sortant sélectionnés si lesdits transferts de parcours menant de la fin desdits segments de parcours entrant sélectionnés au début desdits segments de parcours sortant sélectionnés sont plus longs que lesdits transferts de parcours menant du début desdits segments de parcours entrant sélectionnés au début desdits segments de parcours sortant précédemment sélectionnés.

17. Procédé de la revendication 13, dans lequel ladite élimination comprend en outre le fait :
d'éliminer lesdits transferts de parcours menant de la fin desdits segments de parcours entrant sélectionnés au début desdits segments de parcours sortant sélectionnés si lesdits transferts de parcours menant de la fin desdits segments de parcours entrant sélectionnés au début desdits segments de parcours sortant sélectionnés sont plus longs que lesdits transferts de parcours menant de la fin desdits segments de parcours entrant sélectionnés à la fin desdits segments de parcours sortant sélectionnés.

18. Procédé de la revendication 13, dans lequel ladite élimination comprend en outre le fait :
d'éliminer lesdits transferts de parcours menant de la fin desdits segments de parcours entrant sélectionnés au début desdits segments de parcours sortant sélectionnés si lesdits transferts de parcours menant de la fin desdits segments de parcours entrant sélectionnés au début desdits segments de parcours sortant sélectionnés sont plus longs que lesdits transferts de parcours menant du début desdits segments de parcours entrant sélectionnés à la fin desdits segments de parcours sortant sélectionnés.

19. Procédé de la revendication 13, dans lequel ladite élimination comprend en outre le fait :
d'éliminer lesdits transferts de parcours menant de la fin desdits segments de parcours entrant sélectionnés au début desdits segments de parcours sortant sélectionnés si le transfert depuis ledit parcours entrant vers ledit parcours sortant via desdits transferts de parcours menant de la fin desdits segments de parcours entrant sélectionnés au début desdits segments de parcours sortant sélectionnés est plus lent que le transfert depuis ledit parcours entrant vers ledit parcours sortant via lesdits transferts de parcours menant du début desdits segments de parcours entrant sélectionnés à la fin desdits segments de parcours sortant sélectionnés.

20. Procédé de la revendication 13, dans lequel ladite élimination comprend en outre le fait :
d'éliminer lesdits transferts de parcours menant de la fin desdits segments de parcours entrant sélectionnés au début desdits segments de parcours sortant sélectionnés si le déplacement le long desdits segments entrants sélectionnés et le transfert depuis ledit parcours entrant vers ledit parcours sortant via lesdits transferts de parcours menant de la fin desdits segments de parcours entrant sélectionnés au début desdits segments de parcours sortant sélectionnés sont désavantageux par rapport au transfert depuis ledit parcours entrant vers ledit parcours sortant au niveau du début desdits segments de parcours entrant sélectionnés et au déplacement le long dudit parcours sortant vers le début desdits segments de parcours sortant sélectionnés.

21. Procédé de la revendication 13, dans lequel ladite élimination comprend en outre le fait :
d'éliminer lesdits transferts de parcours menant de la fin desdits segments de parcours entrant sélectionnés au début desdits segments de parcours entrant sélectionnés si le transfert depuis ledit parcours entrant vers ledit parcours sortant via lesdits transferts de parcours menant de la fin desdits segments de parcours entrant sélectionnés au début desdits segments de parcours sortant sélectionnés et le déplacement le long desdits segments de parcours sortant sélectionnés sont désavantageux par rapport au déplacement supplémentaire le long dudit parcours entrant au-delà de la fin desdits segments de parcours entrant sélectionnés, et donc au transfert depuis ledit parcours entrant vers ledit parcours sortant via lesdits transferts de parcours menant à la fin desdits segments de parcours sortant sélectionnés.

22. Procédé de la revendication 1, dans lequel ladite identification de paires de parcours comprend le fait :
de déterminer que lesdites paires de parcours sont à proximité les unes des autres si des rectangles délimitant lesdits parcours dans ladite paire se chevauchent ou sont à proximité les uns des autres.

23. Système informatique (209) pour générer des transferts de parcours viables pour un système de planification d'itinéraires (28), comprenant :
un processeur exécutant des instructions lisibles par ordinateur pour identifier des paires de parcours le long de voies de transit fixes, qui sont à proximité les unes des autres, dans une base de données (24) de réseau routier, chacun desdits parcours comprenant un certain nombre d'arrêts reliés par des segments de parcours parcourus dans un ordre spécifique, l'identification des transferts de parcours entre lesdits arrêts le long d'un parcours entrant desdites paires et lesdits arrêts le long d'un parcours sortant desdites paires, l'élimination d'au moins l'un desdits transferts de parcours si le déplacement dudit parcours entrant vers ledit parcours sortant via ledit au moins un desdits transferts de parcours est désavantageux par rapport au déplacement depuis ledit parcours entrant vers ledit parcours sortant via ledit au moins un autre desdits transferts de parcours, et le stockage desdits transferts de parcours non éliminés dans l'unité de stockage accessible audit système informatique pour une utilisation par un système de planification d'itinéraires.

Internet
32

Figure 1

**Figure 2**

**Figure 3**

**Figure 4**

EP 2 691 740 B1

Start

Define bounding rectangle
for each pattern
110

Identify pairs of patterns with
overlapping or proximate
bounding rectangles
120

Select unanalyzed proximate
pair of patterns
130

Determine viable
pattern-transfers from first to
second pattern, if any
140

Determine viable
pattern-transfers from
second to first pattern, if any
150

Are
there remaining
unanalyzed identified
pattern pair(s)?
160

Yes

No

End

100

**Figure 5**

26

204

208

**Figure 6**

**Figure 7**

**Figure 8**

**Figure 9**

**Figure 10**

Place inbound pattern
segments in an inbound
queue
315

Place outbound pattern
segments in an
outbound queue
310

Start

140

Select next remaining
pattern segment in
outbound queue
320

Select last remaining
pattern segment in
inbound queue
330

Determine walking
distance between
pattern segments
340

Under
the maximum
walking distance?
350

Yes

Is a viable
pattern-transfer?
360

Yes

Store pattern-transfer
370

No

No

Are
there
remaining pattern
segments in inbound
queue?
380

Yes

No

Are
there
remaining pattern
segments in
outbound queue?
390

Yes

No

End

**Figure 11**

<u>340</u>

```
         ( Start )
             │
             ▼
┌─────────────────────┐
│  Set origin node as end
│  node of inbound pattern
│  segment and
│  destination node as
│  start node of outbound
│  pattern segment
│         341
└─────────────────────┘
             │
             ▼
        ╱ Is ╲
      ╱ origin node, ╲      Yes    ┌─────────────────────┐
     ◇ destination node ◇ ───────▶ │ Retrieve walking
      ╲ combo in node- ╱           │ distance and duration
       ╲ connection map? ╱         │ from map
        ╲   342   ╱                │      343
             │                     └─────────────────────┘
             │ No
             ▼
        ╱ Is ╲
      ╱ origin node, origin ╲  Yes  ┌─────────────────────┐
     ◇ node combo in node- ◇ ─────▶ │ Walking distance
      ╲ connection map? ╱           │ exceeds maximum
       ╲   344   ╱                  │ walking distance
             │                      │      345
             │ No                   └─────────────────────┘
             ▼
┌─────────────────────┐
│ Perform itinerary query
│ for walking along
│ walking network
│      346
└─────────────────────┘

┌─────────────────────┐          ╱ Has ╲
│ Set origin node as start │  No  ╱ start node of ╲
│ node of inbound pattern  │◀──── ◇ inbound segment ◇
│ segment                  │       ╲ been set as origin? ╱
│      348                 │        ╲   347   ╱
└─────────────────────┘                  │
                                         │ Yes
                                         ▼
                                     ( End )
```

<u>**Figure 12**</u>

Figure 13

_360_

```
                    ┌───────────┐
                    │   Start   │
                    └─────┬─────┘
                          │
                  ╱───────┴───────╲
                 ╱  $A_{i-1}:A_i \sim B_j:B_{j+1}$  ╲        No
                ╱      quicker than       ╲──────────────┐
                ╲ $A_{i-1}:A_{i+m} \sim B_{j-n}:B_{j+1}$? ╱          │
                 ╲        404        ╱                │
                  ╲───────┬───────╱                  │
                      Yes │                          │
                          ▼                          │
                  ╱───────┴───────╲                  │
                 ╱  $A_{i-1} \sim B_j$ shorter ╲   No   │
                 ╲ walk than $A_i \sim B_j$? ╱────────▶│
                  ╲       412       ╱                  │
                   ╲──────┬──────╱                     │
                      Yes │                            │
                          ▼                            │
                  ╱───────┴───────╲                    │
                 ╱  $A_i \sim B_j$ shorter ╲    No      │
                 ╲ walk than $A_i \sim B_{j+1}$? ╱──────▶│
                  ╲       416       ╱                    │
                   ╲──────┬──────╱                       │
                      Yes │                              │
                          ▼                              │
                  ╱───────┴───────╲                      │
                 ╱  $A_i \sim B_j$ shorter ╲    No        │
                 ╲ walk than $A_{i-1} \sim B_{j+1}$? ╱────▶│
                  ╲       420       ╱                      │
                   ╲──────┬──────╱                         │
                      Yes │                                │
                          ▼                                ▼
                        ( A )                            ( B )
```

# Figure 14A

A

B

$A_{i-1}{:}A_i \sim B_j{:}B_{j+1}$ quicker than $A_{i-1} \sim B_{j+1}$? 424

No

Yes

$A_{i-1}{:}A_i \sim B_j$ either quicker or less walking than $A_{i-1} \sim B_{j-n}{:}B_j$ for all n 428

No

Yes

$A_i \sim B_j{:}B_{j+1}$ either quicker or less walking than $A_i{:}A_{i+m} \sim B_{j+1}$ for all m 432

No

Yes

Pattern-transfer is viable 436

Pattern-transfer is not viable 408

End

**Figure 14B**

**Figure 15**

EP 2 691 740 B1

**Figure 16**

Figure 17

EP 2 691 740 B1

**Figure 18**

**Figure 19**

**Figure 20**

**EP 2 691 740 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Fast Routing in Very Large Public Transportation Networks Using Transfer Patterns. **HANNAH BAST et al.** Algorithms - ESA 2010, 18th Annual European Symposium. Springer, 06 September 2010, 290-301